# EUROPEAN PATENT APPLICATION

(11) **EP 3 110 107 A1**
(43) Date of publication of application: **28.12.2016**
(21) Application number: 16172907.4
(22) Date of filing: 03.06.2016
(51) Int. Cl.: H04L 29/08, H04W 4/04, H04W 4/00, H04W 4/02

(54) **METHOD AND DEVICE FOR MANAGING SELF-BALANCED VEHICLE**

(30) Priority: 26.06.2015 CN 201510369380
(71) Applicant: Xiaomi Inc., Beijing 100085 (CN)
(72) Inventor: XIE, Yan, 100085 BEIJING (CN); REN, Tian, 100085 BEIJING (CN); CHU, Yueyue, 100085 BEIJING (CN)
(74) Representative: Underwood, Nicolas Patrick

(57) **Abstract**

The present invention relates to a method and a device for controlling a self-balanced vehicle. The method includes: establishing (110) a connection with the self-balanced vehicle through Bluetooth; acquiring (120) traveling state information of the self-balanced vehicle through the connection; and controlling (130) the self-balanced vehicle according to the traveling state information of the self-balanced vehicle. Thereby, through the present invention, the user terminal may control the traveling state of the self-balanced vehicle through Bluetooth connection. Thus, it not only improves the control efficiency of the self balanced vehicle, but also brings convenience for the user to control the self-balanced vehicle, and improves the user experience.

## Description

### TECHNICAL FIELD

The present invention generally relates to the field of network communication technology, and more particularly, to a method and a device for controlling a self-balanced vehicle.

### BACKGROUND

In the related art, a self-balanced vehicle can detect changes in its posture by a built-in gyroscope and an acceleration sensor and can adjust a driving motor accordingly by a servo control system to keep balance of a system.

There is no satisfying solution in the prior art to control self-balanced vehicles.

### SUMMARY

In order to solve the problem in the related art, the present invention provides a method and a device for controlling a self-balanced vehicle.

According to a first aspect of embodiments of the present invention, there is provided a method for a mobile terminal to perform controlling a self-balanced vehicle, including:
establishing a connection with the self-balanced vehicle through Bluetooth;
acquiring traveling state information of the self-balanced vehicle through the connection; and
controlling the self-balanced vehicle according to the traveling state information of the self-balanced vehicle.

In the embodiment of the present invention, traveling state information of the self-balanced vehicle may include at least one of a current remaining battery power, whether the current state is locked or unlocked, a current light color, a current traveling direction, a current traveling speed, a current body temperature and a current location.

According to a particular embodiment, the method further includes:
detecting whether a speed adjusting event exists; and
when it is detected that the speed adjusting event exists, sending a received speed adjusting value to the self-balance vehicle through the connection.

According to a particular embodiment, the detecting whether a speed adjusting event exists includes:
detecting whether an operation event for adjusting speed amplitude of a dashboard in a control interface exists; or
detecting whether an operation event for adjusting a speed controlling bar in the control interface exists.

According to a particular embodiment, the establishing a connection with the self-balanced vehicle through Bluetooth includes:
searching for the self-balanced vehicle through Bluetooth; and
pairing the Bluetooth connection with the searched self-balanced vehicle, to establish a connection.

According to a particular embodiment, the pairing the Bluetooth connection with the searched self-balanced vehicle, to establish a connection includes:
when a number of the searched self-balanced vehicle is more than one, receiving a selecting instruction with respect to the self-balanced vehicle; and
connecting the self-balanced vehicle selected according to the selecting instruction.

According to a particular embodiment, the acquiring traveling state information of the self-balanced vehicle through the connection includes:
receiving the traveling state information of the self-balanced vehicle periodically sent by the self-balanced vehicle through the connection; or
sending a state acquiring instruction to the self-balanced vehicle periodically, and receiving the traveling state information of the self-balanced vehicle returned by the self-balanced vehicle according to the state acquiring instruction.

According to a particular embodiment, the controlling the self-balanced vehicle according to the traveling state information of the self-balanced vehicle includes:
displaying the traveling state information in a control interface; and/or
detecting the traveling state information, and alarming when the traveling state information reaches a corresponding traveling state threshold.

According to a particular embodiment, displaying the traveling state information in a control interface includes:
displaying a traveling speed of the self-balanced vehicle in the control interface; and/or
displaying a remaining battery power of the self-balanced vehicle in the control interface; and/or
displaying a body temperature of the self-balanced vehicle in the control interface.

According to a particular embodiment, displaying the traveling state information in a control interface further includes:
when the traveling state information contains a remaining battery power, calculating a remaining continue voyage course according to the remaining battery power; and
displaying the remaining continue voyage course in the control interface.

According to a particular embodiment, the alarming when the traveling state information reaches a corresponding traveling state threshold includes:
alarming when a remaining battery power of the self-balanced vehicle is below a battery power threshold; and/or
alarming when a traveling speed of the self-balanced vehicle is higher than a speed threshold; and/or
alarming when a body temperature of the self-balanced vehicle is higher than a temperature threshold.

According to a particular embodiment, the method further includes:
determining whether the self-balanced vehicle is in a locked state; and
when it is determined that the self-balanced vehicle is in the locked state, releasing the locked state of the self-balanced vehicle.

According to a particular embodiment, the releasing the locked state of the self-balanced vehicle includes:
when a triggering operation of releasing locking is detected, sending an unlocking instruction to the self-balanced vehicle through the connection, such that the self-balanced vehicle releases the locked state according to the received unlocking instruction.

According to a particular embodiment, the method further includes:
when it is determined that the self-balanced vehicle is in the locked state, sending a request for acquiring a remaining battery power to the self-balanced vehicle;
receiving the remaining battery power returned by the self-balanced vehicle; and
displaying the remaining battery power in a lock screen interface.

According to a particular embodiment, the method further includes:
calculating a remaining continue voyage course according to the remaining battery power, and displaying the remaining continue voyage course on the lock screen interface.

According to a particular embodiment, the calculating a remaining continue voyage course according to the remaining battery power includes:
obtaining the remaining continue voyage course based on a product of the remaining battery power and a configurable correlation coefficient.

According to a particular embodiment, the method further includes:
detecting whether a light color setting event for the self-balanced vehicle exists;
when the light color setting event is detected, receiving a light color value selected from a user; and
sending a color adjustment instruction containing the selected light color value to the self-balanced vehicle through the connection.

According to a particular embodiment, the method further includes:
detecting whether a triggering event of a camera mode exists; and
when the triggering event of the camera mode is detected, enabling the camera mode, and displaying an image captured by a camera in a background form in a control interface.

According to a particular embodiment, displaying an image captured by a camera in a background form in a control interface includes:
embedding the image captured by the camera below a user interacting layer of the control interface in real time.

According to a particular embodiment, the method further includes:
under the camera mode, when a triggering operation of photographing is detected, enabling a camera function to photograph.

According to a particular embodiment, the method further includes:
detecting whether a vehicle searching operation is received;
when the vehicle searching operation is received, searching for the self-balanced vehicle through Bluetooth, and pairing the Bluetooth connection with the self-balanced vehicle; and
when the Bluetooth connection with the self-balanced vehicle passes the pairing, sending a vehicle searching instruction to the self-balanced vehicle such that the self-balanced vehicle performs a vehicle searching warning.

According to a particular embodiment, searching for the self-balanced vehicle through Bluetooth, and pairing the Bluetooth connection with the self-balanced vehicle further includes:
obtaining a distance from the self-balanced vehicle through the Bluetooth connection with the self-balanced vehicle; and
displaying the distance from the self-balanced vehicle in the control interface.

According to a particular embodiment, the method further includes:
detecting whether a triggering event of remote control traveling exists;
when it is detected that the triggering event of remote control traveling exists, enabling a traveling remote control function, and receiving set information of a traveling direction and traveling speed input; and
sending the set information of the traveling direction and traveling speed to the self-balanced vehicle to remotely control travelling of the self-balanced vehicle.

According to a particular embodiment, the enabling a traveling remote control function, and receiving set information of a traveling direction and traveling speed input includes:
enabling the traveling remote control function, and detecting whether an setting event for the travelling direction and traveling speed of the self-balanced vehicle exists; and
when it is detected that the setting event for the travelling direction and traveling speed of the self-balanced vehicle exists, receiving set information of the traveling direction and traveling speed input.

According to a particular embodiment, the detecting whether a setting event for the travelling direction and traveling speed of the self-balanced vehicle exists includes:
detecting whether an operation event to adjust a directional angle of a dashboard in the control interface and adjust a distance from a center of the dashboard in the control interface exists.

According to a particular embodiment, the method further includes:
detecting whether a speed limiting operation to the self-balanced vehicle exists; and
when it is detected the speed limiting operation to the self-balanced vehicle, limiting the traveling speed within a speed limiting scope.

According to a particular embodiment, the detecting whether a speed limiting operation to the self-balanced vehicle exists includes:
detecting whether a setting of highest traveling speed for a speed controlling bar in a remote control traveling interface exists.

According to a particular embodiment, the method further includes:
detecting whether a triggering operation of guiding is received; and
if the triggering operation of guiding is received, calling a map function to acquire and display guiding information in real time.

According to a particular embodiment, the calling a map function to acquire and display guiding information in real time includes:
enabling the map function, and switching to a guiding interface to acquire and display a current location and guiding direction data in real time.

According to a particular embodiment, the method further includes:
detecting whether a triggering operation of a compass is received;
if the triggering operation of the compass is received, acquiring a direction indicated by the compass of a system; and
displaying the direction indicated by the compass of the system in the control interface in real time.

According to a particular embodiment, the method further includes:
detecting whether a triggering operation of remote upgrading is received;
if the triggering operation of remote upgrading is received, sending an upgrading instruction to the self-balanced vehicle through the connection; and
receiving an upgrading result returned by the self-balanced vehicle, and displaying the upgrading result in the control interface.

According to a particular embodiment, the method further includes:
detecting whether a triggering operation of user interacting exists; and
if it is detected that the triggering operation of user interacting exists, establishing a connection with a server to send or receive interacting information.

According to a particular embodiment, the method further includes:
sending to a server a request for users of a plurality of self-balanced vehicles to acquire network data;
receiving a statistical result obtained by the server according to the acquiring request; and
displaying and analyzing the statistical result.

According to a second aspect of embodiments of the present invention, there is provided a device for controlling a self-balanced vehicle, including:
a connecting module configured to establish a connection with the self-balanced vehicle through Bluetooth;
an acquiring module configured to acquire traveling state information of the self-balanced vehicle through the connection; and
a controlling module configured to control the self-balanced vehicle according to the traveling state information of the self-balanced vehicle.

According to a particular embodiment, the device further includes:
a speed detecting module configured to detect whether a speed adjusting event exists; and
a speed sending module configured to, when it is detected that the speed adjusting event exists, send a received speed adjusting value to the self-balance vehicle through the connection.

According to a particular embodiment, the speed detecting module includes: a first speed detecting sub-module or a second speed detecting sub-module; wherein
the first speed detecting sub-module is configured to detect whether an operation event for adjusting speed amplitude of a dashboard in a control interface exists; and
the second speed detecting sub-module is configured to detect whether an operation event for adjusting a speed controlling bar in the control interface exists.

According to a particular embodiment, the connecting module includes:
a searching sub-module configured to search for the self-balanced vehicle through Bluetooth; and
a first connecting sub-module configured to pair the Bluetooth connection with the searched self-balanced vehicle, to establish a connection.

According to a particular embodiment, the first connecting sub-module further includes:
a receiving sub-module configured to, when a number of the searched self-balanced vehicle is more than one, receive a selecting instruction with respect to the self-balanced vehicle; and
a second connecting module configured to connect the self-balanced vehicle selected according to the selecting instruction.

According to a particular embodiment, the acquiring module includes: a first acquiring sub-module or a second acquiring sub-module; wherein
the first acquiring sub-module is configured to receive the traveling state information of the self-balanced vehicle periodically sent by the self-balanced vehicle through the connection; and
the second acquiring sub-module is configured to send a state acquiring instruction to the self-balanced vehicle periodically, and receive the traveling state information of the self-balanced vehicle returned by the self-balanced vehicle according to the state acquiring instruction.

According to a particular embodiment, the controlling module includes: a traveling state displaying sub-module and/or a traveling state detecting sub-module; wherein
the traveling state displaying sub-module is configured to display the traveling state information in a control interface; and
the traveling state detecting sub-module is configured to detect the traveling state information, and alarm when the traveling state information reaches a corresponding traveling state threshold.

According to a particular embodiment, wherein the traveling state displaying sub-module includes: a first displaying sub-module; and/or a second displaying sub-module; and/or a third displaying sub-module, wherein
the first displaying sub-module is configured to display a traveling speed of the self-balanced vehicle in the control interface;
the second displaying sub-module is configured to display a remaining battery power of the self-balanced vehicle in the control interface; and
the third displaying sub-module is configured to display a body temperature of the self-balanced vehicle in the control interface.

According to a particular embodiment, the device further includes:
a continue voyage course calculating module configured to, when the traveling state information contains a remaining battery power, calculate a remaining continue voyage course according to the remaining battery power; and
a first continue voyage course displaying module configured to display the remaining continue voyage course in the control interface.

According to a particular embodiment, the traveling state detecting sub-module includes: a first alarming sub-module; and/or a second alarming sub-module; and/or a third alarming sub-module, wherein
the first alarming sub-module is configured to alarm when a remaining battery power of the self-balanced vehicle is below a battery power threshold;
the second alarming sub-module is configured to alarm when a traveling speed of the self-balanced vehicle is higher than a speed threshold; and
the third alarming sub-module is configured to alarm when a body temperature of the self-balanced vehicle is higher than a temperature threshold.

According to a particular embodiment, the device further includes:
a locked state determining module configured to determine whether the self-balanced vehicle is in a locked state; and
a locked state releasing module configured to, when it is determined that the self-balanced vehicle is in the locked state, release the locked state of the self-balanced vehicle.

According to a particular embodiment, the locked state releasing module includes:
an unlocking instruction sub-module configured to, when a triggering operation of releasing locking is detected, send an unlocking instruction to the self-balanced vehicle through the connection, such that the self-balanced vehicle releases the locked state according to the received unlocking instruction.

According to a particular embodiment, the device further includes:
a battery power requesting module configured to, when it is determined that the self-balanced vehicle is in the locked state, send a request for acquiring a remaining battery power to the self-balanced vehicle;
a battery power receiving module configured to receive the remaining battery power returned by the self-balanced vehicle; and
a battery power displaying module configured to display the remaining battery power in a lock screen interface.

According to a particular embodiment, the device further includes:
a continue voyage course calculating module configured to calculate a remaining continue voyage course according to the remaining battery power; and
a second continue voyage course displaying module configured to display the remaining continue voyage course on the lock screen interface.

According to a particular embodiment, the continue voyage course calculating module includes:
a continue voyage course calculating sub-module configured to obtain the remaining continue voyage course based on a product of the remaining battery power and a configurable correlation coefficient.

According to a particular embodiment, the device further includes:
a light color detecting module configured to detect whether a light color setting event for the self-balanced vehicle exists;
a light color receiving module configured to, when the light color setting event is detected, receive a light color value selected from a user; and
a light color sending module configured to send a color adjustment instruction containing the selected light color value to the self-balanced vehicle through the connection.

According to a particular embodiment, the device further includes:
a camera detecting module configured to detect whether a triggering event of a camera mode exists; and
a camera processing module configured to, when the triggering event of the camera mode is detected, enable a camera mode, and display an image captured by a camera in a background form in a control interface.

According to a particular embodiment, the camera processing module includes:
an embedding sub-module configured to embed the image captured by the camera below a user interacting layer of the control interface in real time.

According to a particular embodiment, the device further includes:
a photograph module configured to, under the camera mode, when a triggering operation of photographing is detected, enable a camera function to photograph.

According to a particular embodiment, the device further includes:
a vehicle-searching detecting module configured to detect whether a vehicle searching operation is received;
a Blue-Tooth pairing module configured to, when the vehicle searching operation is received, search for the self-balanced vehicle through Bluetooth, and pair the Bluetooth connection with the self-balanced vehicle; and
a vehicle-searching-instruction module configured to, when the Bluetooth connection with the self-balanced vehicle passes the pairing, send a vehicle searching instruction to the self-balanced vehicle such that the self-balanced vehicle performs a vehicle searching warning.

According to a particular embodiment, the device further includes:
a distance acquiring module configured to obtain a distance from the self-balanced vehicle through the Bluetooth connection with the self-balanced vehicle; and
a distance displaying module configured to display the distance from the self-balanced vehicle in the control interface.

According to a particular embodiment, the device further includes:
a remote control detecting module configured to detect whether a triggering event of remote control traveling exists;
a remote control processing module configured to, when it is detected that the triggering event of remote control traveling exists, enable a traveling remote control function, and receive set information of a traveling direction and traveling speed input; and
a remote control sending module configured to send the set information of the traveling direction and traveling speed to the self-balanced vehicle to remotely control travelling of the self-balanced vehicle.

According to a particular embodiment, the remote control processing module includes:
a first detecting sub-module configured to, enable the traveling remote control function, and detect whether an setting event for the travelling direction and traveling speed of the self-balanced vehicle exists; and
a receiving sub-module configured to, when it is detected that the setting event for the travelling direction and traveling speed of the self-balanced vehicle exists, receive set information of the traveling direction and traveling speed input.

According to a particular embodiment, the first detecting sub-module includes:
a second detecting sub-module configured to detect whether an operation event to adjust a directional angle of a dashboard in the control interface and adjust a distance from a center of the dashboard in the control interface exists.

According to a particular embodiment, the device further includes:
a speed limiting detecting module configured to detect whether a speed limiting operation to the self-balanced vehicle exists; and
a speed limiting processing module configured to, when it is detected the speed limiting operation to the self-balanced vehicle, limit the traveling speed within a speed limiting scope.

According to a particular embodiment, the speed limiting detecting module includes:
a speed limiting detecting sub-module configured to detect whether a setting of highest traveling speed for a speed controlling bar in a remote control traveling interface exists.

According to a particular embodiment, the device further includes:
a guiding detecting module configured to detect whether a triggering operation of guiding is received; and
a guiding processing module configured to, if the triggering operation of guiding is received, call a map function to acquire and display guiding information in real time.

According to a particular embodiment, the guiding processing module includes:
a guiding processing sub-module configured to enable the map function, and switch to a guiding interface to acquire and display a current location and guiding direction data in real time.

According to a particular embodiment, the device further includes:
a compass detecting module configured to detect whether a triggering operation of a compass is received;
a compass direction acquiring module configured to, if the triggering operation of the compass is received, acquire a direction indicated by the compass of a system; and
a compass direction displaying module configured to display the direction indicated by the compass of the system in the control interface in real time.

According to a particular embodiment, the device further includes:
an upgrading detecting module configured to detect whether a triggering operation of remote upgrading is received;
an upgrading instruction sending module configured to, if the triggering operation of remote upgrading is received, send an upgrading instruction to the self-balanced vehicle through the connection; and
an upgrading result processing module configured to, receive an upgrading result returned by the self-balanced vehicle, and display the upgrading result in the control interface.

According to a particular embodiment, the device further includes:
a user interacting detecting module configured to detect whether a triggering operation of user interacting exists; and
a user interacting processing module configured to, if it is detected that the triggering operation of user interacting exists, establish a connection with a server to send or receive interacting information.

According to a particular embodiment, the device further includes:
a data acquiring requesting module configured to send to a server a request for users of a plurality of self-balanced vehicles to acquire network data;
a statistical result receiving module configured to receive a statistical result obtained by the server according to the acquiring request; and
a statistical result displaying module configured to display and analyze the statistical result.

According to a third aspect of embodiments of the present invention, there is provided a device for controlling a self-balanced vehicle, including:
a processor; and
a memory for storing instructions executable by the processor,
wherein the processor is configured to perform:
   establishing a connection with the self-balanced vehicle through Bluetooth;
   acquiring traveling state information of the self-balanced vehicle through the connection; and
   controlling the self-balanced vehicle according to the traveling state information of the self-balanced vehicle.

The technical scheme according to embodiments of the present invention may have the following beneficial effects.

In the present invention, the user terminal establishes a connection with the self-balanced vehicle through Bluetooth; acquires traveling state information of the self-balanced vehicle through the Bluetooth connection; and controls the self-balanced vehicle according to the traveling state information of the self-balanced vehicle. Thereby, the user terminal may control the traveling state of the self-balanced vehicle through Bluetooth connection. Thus, it not only improves the control efficiency of the self-balanced vehicle, but also brings convenience for the user to control the self-balanced vehicle, and improves the user experience.

In the present invention, the user terminal may support to adjust speed of the self-balanced vehicle, send the speed adjusting value of the user to the self-balanced vehicle through the Bluetooth connection, which satisfies the speed adjusting the need of the user with respect to the self-balanced vehicle, and improves the user experience.

In the present invention, the user terminal may search for the self-balanced vehicle through Bluetooth, and establish the Bluetooth connection with the self-balanced vehicle. In particular, the user terminal may establish a connection with the self-balanced vehicle selected by the user, which saves time for the user to search for the self-balanced vehicle and improves the efficiency of searching for the self-balanced vehicle by the user.

In the present invention, when the user terminal controls the self-balanced vehicle, the traveling state information of the self-balanced vehicle needs to be acquired. The traveling state information of the self-balanced vehicle may be acquired by a passive receiving way or an active acquiring way, thus improving the efficiency of acquiring the traveling state information of the self-balanced vehicle by the user terminal.

In the present invention, the user terminal displays the traveling state information of the self-balanced vehicle in the control interface, and detects the traveling state information. When any information among the traveling state information reaches corresponding traveling state threshold, it is alarmed. Therefore, the user may take corresponding safety measures for the self-balanced vehicle according to different alarms of the user terminal, which may improve the safety for the user to use the self-balanced vehicle and improve the user experience.

In the present invention, when the self-balanced vehicle is in a locked state, the user terminal may also acquire a remaining battery power and a remaining continue voyage course of the self-balanced vehicle, and display the remaining battery power and remaining continue voyage course of the self-balanced vehicle on a lock screen interface. Therefore, the user may determine whether to charge the self-balanced vehicle according to the remaining battery power and remaining continue voyage course of the self-balanced vehicle on the lock screen interface. Thus, it improves the user experience and also increases the safety to use the self-balanced vehicle.

In the present invention, the user terminal may support the user to set light colors, and send a color adjustment instruction containing the selected light color value to the self-balanced vehicle through the Bluetooth connection. Therefore, it satisfies the need of the user to set the light colors, improving the user experience.

In the present invention, the use terminal may support the user to set a traveling direction, and specific setting ways are provided in the control interface. Therefore, the user may accomplish setting the traveling way of the self-balanced vehicle by operating the control interface, which may reduce difficulty for the user to set the traveling direction and improve the user experience.

In the present invention, the user terminal may support a camera mode, such that the user may also acquire the ambient environmental condition and photograph while he is controlling the self-balanced vehicle. Thus, different needs of the user may be better satisfied, and the safety for the user to use the self-balanced vehicle is also improved.

In the present invention, the control interface of the user terminal supports vehicle searching function. It may not only acquire a vehicle searching warning but also acquire a distance from the self-balanced vehicle, which better satisfies the need of the user and improves the user experience.

In the present invention, the user terminal may support function of remotely controlling the self-balanced vehicle, send set information of a traveling direction and traveling speed of the user to the self-balanced vehicle to remotely control travelling of the self-balanced vehicle. Thus, the need of the user to remotely control the self-balanced vehicle is satisfied and the user experience is improved.

In the present invention, the user terminal may support guiding function, and may feedback the guiding information to the user according to the need of guiding in real time, such that the user may acquire the guiding information timely. Thus, it may avoid the user getting lost, improve the safety for the user to use the self-balanced vehicle and improve the user experience.

In the present invention, the user terminal may support compass function. A direction indicated by the compass of a system may be displayed in the control interface in real time, such that the user may acquire the guiding information timely. Thus, it may avoid the user getting lost, improve the safety for the user to use the self-balanced vehicle and improve the user experience.

In the present invention, the user terminal may support remote upgrade function of the self-balanced vehicle, and send an upgrading instruction to the self-balanced vehicle through the Bluetooth connection, such that the self-balanced vehicle upgrades according to the upgrading instruction and returns an upgrading result to the user terminal, thus increasing control scope of the self-balanced vehicle, improving control efficiency of the self-balanced vehicle, and also improving the safety for the user to use the self-balanced vehicle.

In the present invention, the user terminal may support user interacting function, and establish a connection with a server to send or receive interacting information. Various needs of the user are satisfied and the user experience is improved.

In the present invention, the user terminal may acquire and display a statistical result of the self-balanced vehicle of the server, to facilitate the user to better control the self-balanced vehicle according to the statistical result. Thus, the user may control the self-balanced vehicle more safely and more efficiently and improve the user experience.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a flow chart illustrating a method for controlling a self-balanced vehicle according to an exemplary embodiment of the present invention;
Fig. 2 is a flow chart illustrating a method for controlling a self-balanced vehicle according to another exemplary embodiment of the present invention;
Fig. 3 is a flow chart illustrating a method for controlling a self-balanced vehicle according to another exemplary embodiment of the present invention;
Fig. 4 is a flow chart illustrating a method for controlling a self-balanced vehicle according to another exemplary embodiment of the present invention;
Fig. 5 is a flow chart illustrating a method for controlling a self-balanced vehicle according to another exemplary embodiment of the present invention;
Fig. 6 is a flow chart illustrating a method for controlling a self-balanced vehicle according to another exemplary embodiment of the present invention;
Fig. 7 is a flow chart illustrating a method for controlling a self-balanced vehicle according to another exemplary embodiment of the present invention;
Fig. 8 is a flow chart illustrating a method for controlling a self-balanced vehicle according to another exemplary embodiment of the present invention;
Fig. 9 is a flow chart illustrating a method for controlling a self-balanced vehicle according to another exemplary embodiment of the present invention;
Fig. 10 is a flow chart illustrating a method for controlling a self-balanced vehicle according to another exemplary embodiment of the present invention;
Fig. 11 is a flow chart illustrating a method for controlling a self-balanced vehicle according to another exemplary embodiment of the present invention;
Fig. 12 is a flow chart illustrating a method for controlling a self-balanced vehicle according to another exemplary embodiment of the present invention;
Fig. 13 is a flow chart illustrating a method for controlling a self-balanced vehicle according to another exemplary embodiment of the present invention;
Fig. 14 is a flow chart illustrating a method for controlling a self-balanced vehicle according to another exemplary embodiment of the present invention;
Fig. 15 is a flow chart illustrating a method for controlling a self-balanced vehicle according to another exemplary embodiment of the present invention;
Fig. 16 is a flow chart illustrating a method for controlling a self-balanced vehicle according to another exemplary embodiment of the present invention;
Fig. 17 is a diagram illustrating an application scenario of a method for controlling a self-balanced vehicle according to an exemplary embodiment of the present invention;
Fig. 18 is a display schematic diagram of a control interface of a user terminal according to an exemplary embodiment of the present invention;
Fig. 19 is a display schematic diagram of a control interface of a user terminal according to another exemplary embodiment of the present invention;
Fig. 20 is a display schematic diagram of a control interface of a user terminal according to another exemplary embodiment of the present invention;
Fig. 21 is a block diagram of a device for controlling a self-balanced vehicle according to an exemplary embodiment of the present invention;
Fig. 22 is a block diagram of a device for controlling a self-balanced vehicle according to another exemplary embodiment of the present invention;
Fig. 23 is a block diagram of a device for controlling a self-balanced vehicle according to another exemplary embodiment of the present invention;
Fig. 24 is a block diagram of a device for controlling a self-balanced vehicle according to another exemplary embodiment of the present invention;
Fig. 25 is a block diagram of a device for controlling a self-balanced vehicle according to another exemplary embodiment of the present invention;
Fig. 26 is a block diagram of a device for controlling a self-balanced vehicle according to another exemplary embodiment of the present invention;
Fig. 27 is a block diagram of a device for controlling a self-balanced vehicle according to another exemplary embodiment of the present invention;
Fig. 28 is a block diagram of a device for controlling a self-balanced vehicle according to another exemplary embodiment of the present invention;
Fig. 29 is a block diagram of a device for controlling a self-balanced vehicle according to another exemplary embodiment of the present invention;
Fig. 30 is a block diagram of a device for controlling a self-balanced vehicle according to another exemplary embodiment of the present invention;
Fig. 31 is a block diagram of a device for controlling a self-balanced vehicle according to another exemplary embodiment of the present invention;
Fig. 32 is a block diagram of a device for controlling a self-balanced vehicle according to another exemplary embodiment of the present invention;
Fig. 33 is a block diagram of a device for controlling a self-balanced vehicle according to another exemplary embodiment of the present invention;
Fig. 34 is a block diagram of a device for controlling a self-balanced vehicle according to another exemplary embodiment of the present invention;
Fig. 35 is a block diagram of a device for controlling a self-balanced vehicle according to another exemplary embodiment of the present invention;
Fig. 36 is a block diagram of a device for controlling a self-balanced vehicle according to another exemplary embodiment of the present invention;
Fig. 37 is a block diagram of a device for controlling a self-balanced vehicle according to another exemplary embodiment of the present invention;
Fig. 38 is a block diagram of a device for controlling a self-balanced vehicle according to another exemplary embodiment of the present invention;
Fig. 39 is a block diagram of a device for controlling a self-balanced vehicle according to another exemplary embodiment of the present invention;
Fig. 40 is a block diagram of a device for controlling a self-balanced vehicle according to another exemplary embodiment of the present invention;
Fig. 41 is a block diagram of a device for controlling a self-balanced vehicle according to another exemplary embodiment of the present invention;
Fig. 42 is a block diagram of a device for controlling a self-balanced vehicle according to another exemplary embodiment of the present invention;
Fig. 43 is a block diagram of a device for controlling a self-balanced vehicle according to another exemplary embodiment of the present invention;
Fig. 44 is a block diagram of a device for controlling a self-balanced vehicle according to another exemplary embodiment of the present invention;
Fig. 45 is a block diagram of a device for controlling a self-balanced vehicle according to another exemplary embodiment of the present invention;
Fig. 46 is a block diagram of a device for controlling a self-balanced vehicle according to another exemplary embodiment of the present invention;
Fig. 47 is a block diagram of a device for controlling a self-balanced vehicle according to another exemplary embodiment of the present invention;
Fig. 48 is a block diagram of a device for controlling a self-balanced vehicle according to another exemplary embodiment of the present invention;
Fig. 49 is a block diagram of a device for controlling a self-balanced vehicle according to another exemplary embodiment of the present invention;
Fig. 50 is a block diagram of a device for controlling a self-balanced vehicle according to another exemplary embodiment of the present invention;
Fig. 51 is a block diagram of a device for controlling a self-balanced vehicle according to another exemplary embodiment of the present invention;
Fig. 52 is a block diagram of a device for controlling a self-balanced vehicle according to another exemplary embodiment of the present invention; and
Fig. 53 is a block diagram of a device for controlling a self-balanced vehicle according to another exemplary embodiment of the present invention.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of apparatuses and methods consistent with aspects related to the invention as recited in the appended claims.

The terms used herein are merely for describing a particular embodiment, rather than limiting the present invention. As used in the present invention and the appended claims, terms in singular forms such as "a", "said" and "the" are intended to also include plural forms, unless explicitly dictated otherwise. It should also be understood that the term "and / or" used herein means any one or any possible combination of one or more associated listed items.

It should be understood that, although it may describe an element with a term first, second, or third, etc., the element is not limited by these terms. These terms are merely for distinguishing among elements of the same kind. For example, without departing from the scope of the present invention, a first element may also be referred to as a second element. Similarly, a second element may also be referred to as a first element. Depending on the context, a term "if" as used herein may be interpreted as "when", "where" or "in response to".

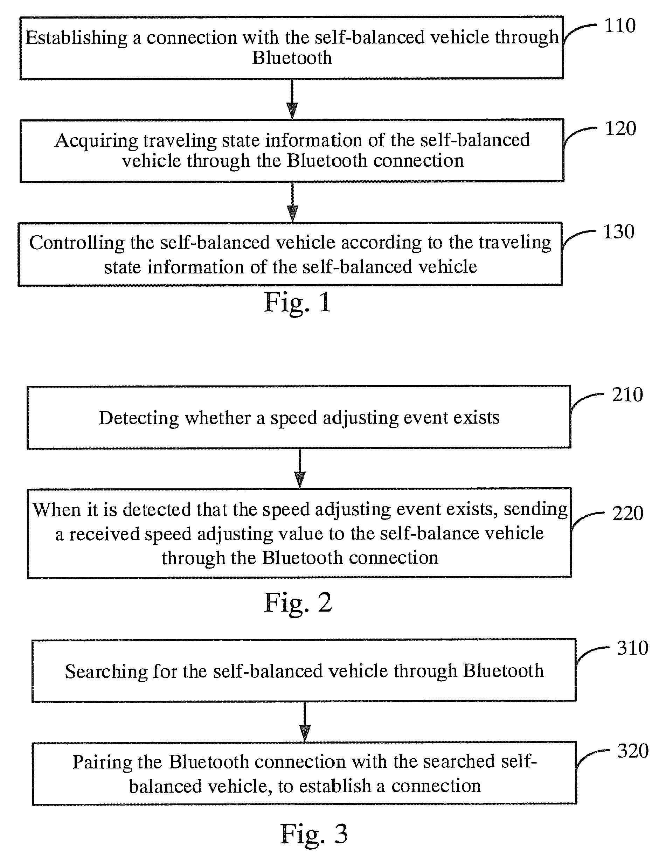

Fig. 1 is a flow chart of a method for controlling a self-balanced vehicle according to an exemplary embodiment of the present invention, which may be applied in a user terminal. The method includes the following steps.

In step 110, a connection with the self-balanced vehicle is established through Bluetooth.

In the embodiment of the present invention, after the user terminal establishes a connection with the self-balanced vehicle through Bluetooth, it may exchange data with the self-balanced vehicle in a short range through Bluetooth. Wherein the self-balanced vehicle may be selected by the user and accepts control by the user.

In step 120, traveling state information of the self-balanced vehicle is acquired through the Bluetooth connection.

In the embodiment of the present invention, traveling state information of the self-balanced vehicle may include at least one of a current remaining battery power, whether the current state is locked or unlocked, a current light color, a current traveling direction, a current traveling speed, a current body temperature and a current location.

In step 130, the self-balanced vehicle is controlled according to the traveling state information of the self-balanced vehicle.

In the embodiment of the present invention, the user terminal provides the user a platform which can control the self-balanced vehicle, i.e. a control interface of the self-balanced vehicle. In addition, the control interface may display traveling state information of the self-balanced vehicle, to facilitate the user to control the self-balanced vehicle according to the traveling state information of the self-balanced vehicle.

For example, the current light color of the self-balanced vehicle is white, while the user prefers blue. The user may set the light color to be blue through the control interface.

It can be seen from the above embodiment that, the user terminal establishes a connection with the self-balanced vehicle through Bluetooth; acquires traveling state information of the self-balanced vehicle through the Bluetooth connection; and controls the self-balanced vehicle according to the traveling state information of the self-balanced vehicle. Thereby, the user terminal may control the traveling state of the self-balanced vehicle through Bluetooth connection. Thus, it not only improves the control efficiency of the self-balanced vehicle, but also brings convenience for the user to control the self-balanced vehicle, and improves the user experience.

Fig. 2 is a flow chart illustrating a method for controlling a self-balanced vehicle according to another exemplary embodiment of the present invention, which may be applied in a user terminal. Based on the method as shown in Fig. 1, the method may further include the following steps.

In step 210, it is detected whether a speed adjusting event exists.

In the embodiment of the present invention, the speed adjusting event may be automatically triggered by the user terminal according to the traveling state information of the self-balanced vehicle. For example, when the traveling speed of the self-balanced vehicle is too fast and the traveling speed of the self-balanced vehicle needs to be adjusted, the user terminal may automatically trigger a speed adjusting event. In addition, the speed adjusting event may also be triggered by the user. For example, when the user needs to adjust the traveling speed of the self-balanced vehicle, he may also trigger the speed adjusting event.

Optionally, when it is detected whether a speed adjusting event exists, at least one of the following two ways may be adopted.

First way: it is detected whether an operation event for adjusting speed amplitude of a dashboard in a control interface exists.

In the embodiment of the present invention, the control interface includes a dashboard, on which a moving point that the user can drag is provided. A distance between the moving point and a central point of the dashboard may indicate speed amplitude. The larger the distance between the moving point and the central point of the dashboard is, the larger the speed amplitude is, which represents a higher traveling speed of the self-balanced vehicle. Therefore, the user may drag the moving point to move in the dashboard, to achieve an objective of adjusting the traveling speed of the self-balanced vehicle.

Second way: it is detected whether an operation event for adjusting a speed controlling bar in the control interface exists.

In the embodiment of the present invention, the control interface includes a speed controlling bar, on which a moving point that the user can drag is provided. A linear distance between the moving point and a starting end of the speed controlling bar may indicate speed amplitude. The larger the linear distance between the moving point and the starting end of the speed controlling bar is, the larger the speed amplitude is, which represents a higher traveling speed of the self-balanced vehicle. Therefore, the user may drag the moving point to move on the speed controlling bar, to achieve an objective of adjusting the traveling speed of the self-balanced vehicle.

In step 220, when it is detected that the speed adjusting event exists, a received speed adjusting value is sent to the self-balance vehicle through the Bluetooth connection.

It can be seen from the above embodiment that, the user terminal supports to adjust speed of the self-balanced vehicle, sends the speed adjusting value of the user to the self-balanced vehicle through the Bluetooth connection, which satisfies the speed adjusting need of the user with respect to the self-balanced vehicle, and improves the user experience.

Fig. 3 is a flow chart illustrating a method for controlling a self-balanced vehicle according to another exemplary embodiment of the present invention, which may be applied in a user terminal. The step 110 of establishing a connection with the self-balanced vehicle through Bluetooth may include the following steps.

In step 310, the self-balanced vehicle is searched for through Bluetooth.

In the embodiment of the present invention, when the self-balanced vehicle is searched for through Bluetooth, one self-balanced vehicle or a plurality of self-balanced vehicles may be searched out.

In step 320, the Bluetooth connection with the searched self-balanced vehicle is paired, to establish a connection.

In the embodiment of the present invention, if only one self-balanced vehicle is searched out, the connection is established after the Bluetooth connection with the searched self-balanced vehicle is paired; if a plurality of self-balanced vehicles are searched out, the connection with the plurality of self-balanced vehicles may be established, or the user may select the self-balanced vehicles needing to be connected.

Optionally, when performing the step 320 of pairing the Bluetooth connection with the searched self-balanced vehicle, to establish a connection, the following way may be further adopted:
When a number of the searched self-balanced vehicle is more than one, a selecting instruction with respect to the self-balanced vehicle is received, and the self-balanced vehicle selected by the user is connected according to the selecting instruction.

It can be seen from the above embodiment that, the user terminal may search for the self-balanced vehicle through Bluetooth, and establish the Bluetooth connection with the self-balanced vehicle. In particular, the user terminal may establish a connection with the self-balanced vehicle selected by the user, which saves time for the user to search for the self-balanced vehicle and improves the efficiency of searching for the self-balanced vehicle by the user.

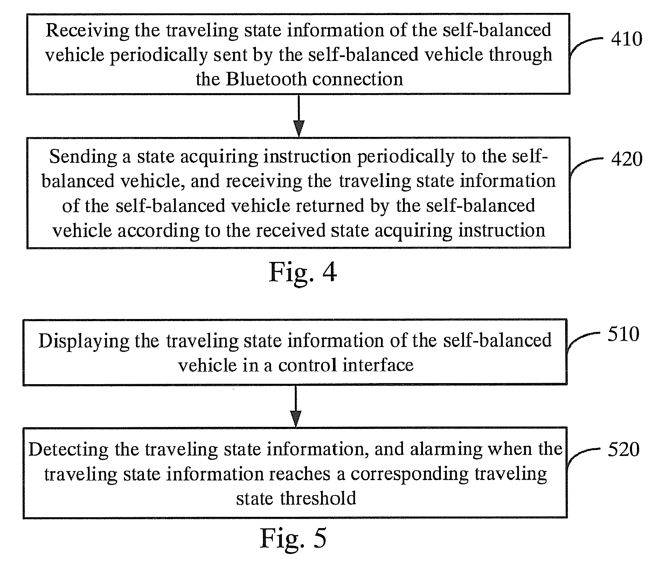

Fig. 4 is a flow chart illustrating a method for controlling a self-balanced vehicle according to another exemplary embodiment of the present invention, which may be applied in a user terminal. The step 120 of acquiring traveling state information of the self-balanced vehicle through the Bluetooth connection may include step 410 or step 420.

In step 410, the traveling state information of the self-balanced vehicle periodically sent by the self-balanced vehicle is received through the Bluetooth connection.

In step 420, a state acquiring instruction is periodically sent to the self-balanced vehicle, and the traveling state information of the self-balanced vehicle returned by the self-balanced vehicle according to the received state acquiring instruction is received.

The above step 410 is a passive receiving way, and the step 420 is an active acquiring way, both of which aim to acquire the traveling state information of the self-balanced vehicle, and then display the information in the control interface, to facilitate the user to control the self-balanced vehicle according to the information.

In the embodiment of the present invention, when the user terminal controls the self-balanced vehicle, the traveling state information of the self-balanced vehicle needs to be acquired. The traveling state information of the self-balanced vehicle may be acquired by a passive receiving way or an active acquiring way, thus improving the efficiency of acquiring the traveling state information of the self-balanced vehicle by the user terminal.

Fig. 5 is a flow chart illustrating a method for controlling a self-balanced vehicle according to another exemplary embodiment of the present invention, which may be applied in a user terminal. The step 130 of controlling the self-balanced vehicle according to the traveling state information of the self-balanced vehicle may include step 510 and/or step 520.

In step 510, the traveling state information of the self-balanced vehicle is displayed in a control interface.

In the embodiment of the present invention, the control interface is a platform provided by the user terminal for the user to control the self-balanced vehicle. The traveling state information of the self-balanced vehicle is displayed on the interface, to facilitate the user to control the self-balanced vehicle according to the information.

Optionally, in the step 510 of displaying the traveling state information of the self-balanced vehicle in a control interface, corresponding display is performed according to different traveling state information:
displaying a traveling speed of the self-balanced vehicle in the control interface; and/or
displaying a remaining battery power of the self-balanced vehicle in the control interface; and/or
displaying a body temperature of the self-balanced vehicle in the control interface.

For example, displaying content in the control interface includes: the traveling speed of the self-balanced vehicle being 05 km/h, the remaining battery power being 40%, the remaining continue voyage course being 20 km, or the like.

Optionally, in the step 510 of displaying the traveling state information in a control interface, it may further include the following content:
when the traveling state information of the self-balanced vehicle contains a remaining battery power, calculating a remaining continue voyage course according to the remaining battery power; and displaying the remaining continue voyage course in the control interface.

Further Optionally, when a remaining continue voyage course is calculated according to the remaining battery power, the remaining continue voyage course may be obtained based on a product of the remaining battery power and a configurable correlation coefficient, as shown in formula (1).

The remaining continue voyage course = the remaining battery power x the configurable correlation coefficient................. formula (1)

Wherein the configurable correlation coefficient may be a value configured by practical experience.

For example, the display content of the control interface further includes: the body temperature being 45°.

In step 520, the traveling state information is detected, and it is alarmed when the traveling state information reaches a corresponding traveling state threshold.

In the embodiment of the present invention, there are many alarming ways, for example, it may be a color warning, a sound warning or the like.

Optionally, in the step 510 of alarming when the traveling state information of the self-balanced vehicle reaches a corresponding traveling state threshold, corresponding alarms are conducted according to different traveling state thresholds:
alarming when a remaining battery power of the self-balanced vehicle is below a battery power threshold; and/or
alarming when a traveling speed of the self-balanced vehicle is higher than a speed threshold; and/or
alarming when a body temperature of the self-balanced vehicle is higher than a temperature threshold.

For example, when the remaining battery power of the self-balanced vehicle is higher than the battery power threshold, the display color of the remaining battery power of the self-balanced vehicle is green, which indicates that the remaining battery power of the self-balanced vehicle is normal; when the remaining battery power of the self-balanced vehicle equals to the battery power threshold, the display color of the remaining battery power of the self-balanced vehicle is yellow, which indicates that the remaining battery power of the self-balanced vehicle reaches a critical value; when the remaining battery power of the self-balanced vehicle is below the battery power threshold, the display color of the remaining battery power of the self-balanced vehicle is red, which indicates that the remaining battery power of the self-balanced vehicle is too low and the self-balanced vehicle needs to be charged, so that the user may charge the self-balanced vehicle timely upon he sees red.

It can be seen from the above embodiment that, the user terminal displays the traveling state information of the self-balanced vehicle in the control interface, and detects the traveling state information. When any information among the traveling state information reaches corresponding traveling state threshold, it is alarmed. Therefore, the user may take corresponding safety measures for the self-balanced vehicle according to different alarms of the user terminal, which may improve the safety for the user to use the self-balanced vehicle and improve the user experience.

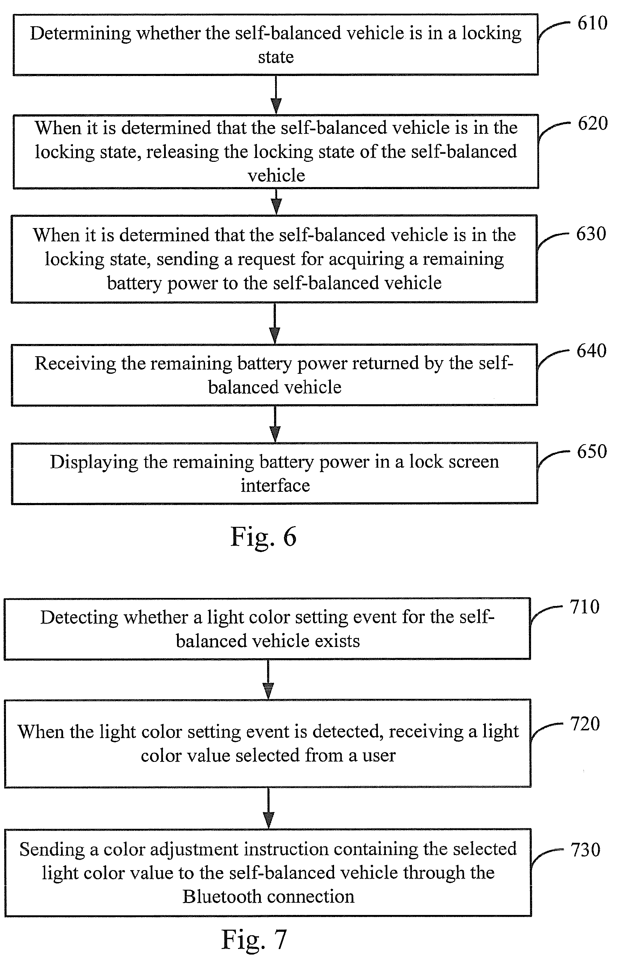

Fig. 6 is a flow chart illustrating a method for controlling a self-balanced vehicle according to another exemplary embodiment of the present invention, which may be applied in a user terminal. Based on the method as shown in Fig. 1, the method may further include the following steps.

In step 610, it is determined whether the self-balanced vehicle is in a locked state.

In the embodiment of the present invention, if the traveling state information of the self-balanced vehicle includes a locked state or an unlocked state of the self-balanced vehicle, it may be determined whether the self-balanced vehicle is in the locked state from the traveling state information of the self-balanced vehicle.

In step 620, when it is determined that the self-balanced vehicle is in the locked state, the locked state of the self-balanced vehicle is released.

In the embodiment of the present invention, the locked state of the self-balanced vehicle may be released according to the instruction of the user.

Optionally, the following way may be adopted to release the locked state of the self-balanced vehicle.

When a triggering operation of releasing locking is detected, an unlocking instruction is sent to the self-balanced vehicle through the connection, such that the self-balanced vehicle releases the locked state according to the received unlocking instruction.

Wherein the locking releasing triggering operation may be triggered by the user.

Optionally, after the step 610 of determining whether the self-balanced vehicle is in a locked state, it may further include the following steps.

In step 630, when it is determined that the self-balanced vehicle is in the locked state, a request for acquiring a remaining battery power is sent to the self-balanced vehicle.

In step 640, the remaining battery power returned by the self-balanced vehicle is received.

In step 650, the remaining battery power is displayed in a lock screen interface.

Further Optionally, after the step 640 of receiving the remaining battery power returned by the self-balanced vehicle, a remaining continue voyage course may also be calculated according to the remaining battery power, and the remaining continue voyage course may be displayed on the lock screen interface. Wherein one way to calculate the remaining continue voyage course may be shown as formula (1).

In the embodiment of the present invention, when the self-balanced vehicle is in a locked state, the user terminal may further acquire a remaining battery power and a remaining continue voyage course of the self-balanced vehicle, and display the remaining battery power and remaining continue voyage course of the self-balanced vehicle on a lock screen interface. Therefore, the user may determine whether to charge the self-balanced vehicle according to the remaining battery power and remaining continue voyage course of the self-balanced vehicle on the lock screen interface. Thus, it improves the user experience and also increases the safety to use the self-balanced vehicle.

Fig. 7 is a flow chart illustrating a method for controlling a self-balanced vehicle according to another exemplary embodiment of the present invention, which may be applied in a user terminal. Based on the method as shown in Fig. 1, the method may further include the following steps.

In step 710, it is detected whether a light color setting event for the self-balanced vehicle exists.

In the embodiment of the present invention, the light color setting event may be triggered by the user. The user may set the light color by the light color setting event. For example, the user may select various preset colors provided by the user terminal, and the user may further input specific color values, or the like.

In step 720, when the light color setting event is detected, a light color value selected from a user is received.

In step 730, a color adjustment instruction containing the selected light color value is sent to the self-balanced vehicle through the Bluetooth connection.

It can be seen from the above embodiment that, the user terminal may support the user to set light colors, and send a color adjustment instruction containing the selected light color value to the self-balanced vehicle through the Bluetooth connection. Therefore, it satisfies the need of the user to set the light colors, improving the user experience.

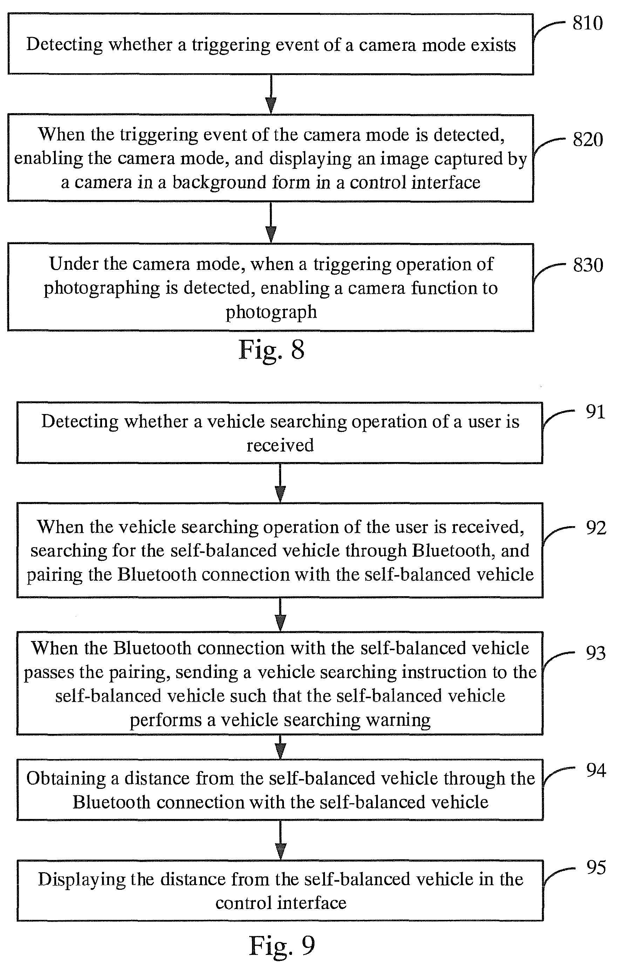

Fig. 8 is a flow chart illustrating a method for controlling a self-balanced vehicle according to another exemplary embodiment of the present invention, which may be applied in a user terminal. Based on the method as shown in Fig. 1, the method may further include the following steps.

In step 810, it is detected whether a triggering event of a camera mode exists.

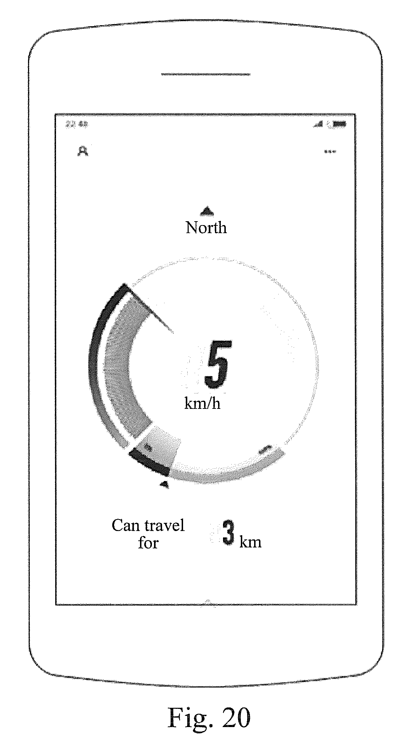

In the embodiment of the present invention, a shortcut starting way of the camera is provided in the control interface. As shown in Fig. 20, the camera mode may be enabled by clicking the speed value (05 km/h) in the middle, an ambient image captured by the camera may be directly displayed in a background form in a control interface. It avoids the situation where the user forgets to note the ambient environment when he uses the terminal, improving the user experience.

In step 820, when the triggering event of the camera mode is detected, the camera mode is enabled, and an image captured by a camera is displayed in a background form in a control interface.

In the embodiment of the present invention, after the camera mode is enabled, an ambient image captured by the camera may be directly displayed in a background form in a control interface. It avoids the situation where the user forgets to note the ambient environment when he uses the terminal.

In an embodiment, in the step 820 of displaying an image captured by a camera in a background form in a control interface, the image captured by the camera may be embedded below a user interacting layer of the control interface in real time.

In the embodiment of the present invention, the control interface may include a plurality of layers. In order to guarantee the user can see the image captured by the camera while he is controlling the self-balanced vehicle, the image captured by the camera is embedded below a user interacting layer of the control interface in real time.

In an embodiment, in the step 820 of displaying an image captured by a camera in a background form in a control interface, it may further include the following steps.

In step 830, under the camera mode, when a triggering operation of photographing is detected, a camera function is enabled to photograph.

In the embodiment of the present invention, there may be many ways for the user to trigger a photographing operation. The user may click a photographing button in the control interface, or press a physical key which triggers the photographing operation, for example, press a volume key.

It can be seen from the above embodiment that, the user terminal may support a camera mode, such that the user may also acquire the ambient environmental condition and photograph while he is controlling the self-balanced vehicle. Thus, different needs of the user may be better satisfied, and the safety for the user to use the self-balanced vehicle is also improved.

Fig. 9 is a flow chart illustrating a method for controlling a self-balanced vehicle according to another exemplary embodiment of the present invention, which may be applied in a user terminal. Based on the method as shown in Fig. 1, the method may further include the following steps.

In step 91, it is detected whether a vehicle searching operation of a user is received.

In the embodiment of the present invention, the control interface supports the vehicle searching operation of the user. When the user needs to use the self-balanced vehicle, he may trigger the vehicle searching operation. The vehicle searching operation may be clicking a vehicle searching button in the control interface, may be pressing the physical key which triggers the vehicle searching operation, or may also be a voice instruction, or the like.

In step 92, when the vehicle searching operation of the user is received, the self-balanced vehicle is searched for through Bluetooth, and the Bluetooth connection with the self-balanced vehicle is paired.

In step 93, when the Bluetooth connection with the self-balanced vehicle passes the pairing, a vehicle searching instruction is sent to the self-balanced vehicle such that the self-balanced vehicle performs a vehicle searching warning.

In the embodiment of the present invention, the vehicle searching warning may be a sound warning or a light warning, etc.

Optionally, after the step 92 of searching for the self-balanced vehicle through Bluetooth and pairing the Bluetooth connection with the self-balanced vehicle, it may further include the following steps.

In step 94, a distance from the self-balanced vehicle is obtained through the Bluetooth connection with the self-balanced vehicle.

For example, the distance between the user terminal and the self-balanced vehicle is 5 meters.

In step 95, the distance from the self-balanced vehicle is displayed in the control interface.

It can be seen from the above embodiment that, the control interface of the user terminal supports vehicle searching function. It may not only acquire a vehicle searching warning but also acquire a distance from the self-balanced vehicle, which better satisfies the need of the user and improves the user experience.

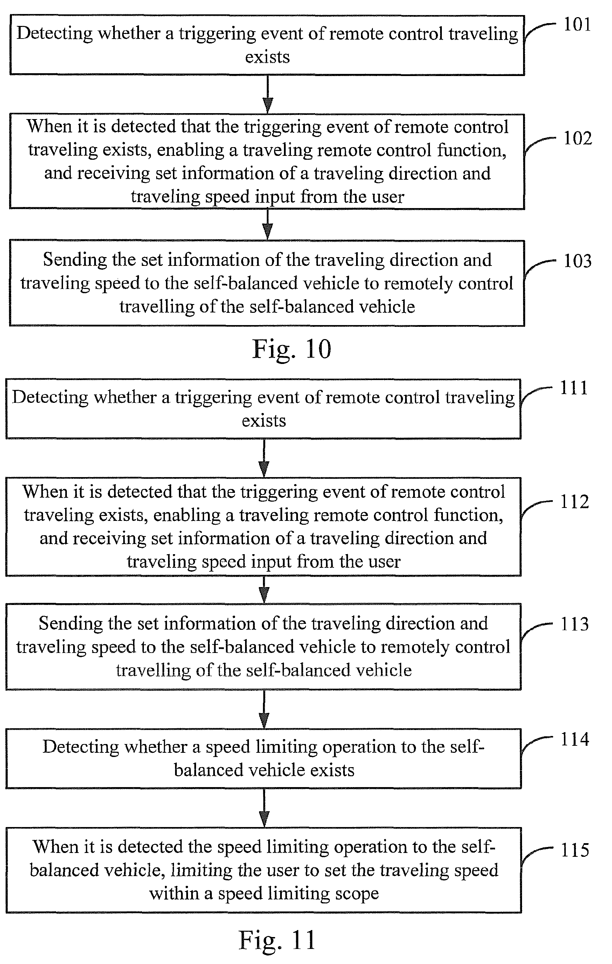

Fig. 10 is a flow chart illustrating a method for controlling a self-balanced vehicle according to another exemplary embodiment of the present invention, which may be applied in a user terminal. Based on the method as shown in Fig. 9, the method may further include the following steps.

In step 101, it is detected whether a triggering event of remote control traveling exists.

In step 102, when it is detected that the triggering event of remote control traveling exists, a traveling remote control function is enabled, and set information of a traveling direction and traveling speed input from the user is received.

In step 103, the set information of the traveling direction and traveling speed is sent to the self-balanced vehicle to remotely control travelling of the self-balanced vehicle.

In an embodiment, in the step 102 of enabling a traveling remote control function and receiving set information of a traveling direction and traveling speed input from the user, it may adopt the following processing ways:
(1) enabling the traveling remote control function, and detecting whether an setting event for the travelling direction and traveling speed of the self-balanced vehicle exists; and
(2) when it is detected that the setting event for the travelling direction and traveling speed of the self-balanced vehicle exists, set information of the traveling direction and traveling speed input from the user is received.

In an embodiment, in the above (1) of detecting whether an setting event for the travelling direction and traveling speed of the self-balanced vehicle exists, it may adopt the following processing way:
detecting whether an operation event to adjust a directional angle of a dashboard in the control interface and adjust a distance from a center of the dashboard in the control interface exists.

In the embodiment of the present invention, the control interface includes a dashboard. The user may achieve an objective of adjusting the traveling direction and traveling speed of the self-balanced vehicle by dragging a moveable point on the dashboard. For example, the user may move the moveable point up, down, left and right, and the corresponding traveling direction of the self-balanced vehicle is forward, backward, towards the left, and towards the right. The user terminal senses a location of the moveable point and calculates an inclined angle between the location of the moveable point and 0°straight line at the center of the dashboard. The inclined angle is the directional angle of the self-balanced vehicle. Besides, a distance between the location of the moveable point and the center of the dashboard represents the traveling speed of the self-balanced vehicle.

It can be seen from the above embodiment that, the user terminal supports remote control function, it is detected whether a triggering event of remote control traveling exists; if the triggering event of remote control traveling is detected, a traveling remote control function is enabled, and set information of a traveling direction and traveling speed input from the user is received; the set information of the traveling direction and traveling speed is sent to the self-balanced vehicle to remotely control travelling of the self-balanced vehicle, which better satisfies the remote control need of the user and improves the user experience.

Fig. 11 is a flow chart illustrating a method for controlling a self-balanced vehicle according to another exemplary embodiment of the present invention, which may be applied in a user terminal. Based on the method as shown in Fig. 10, the method may further include the following steps.

In step 111, it is detected whether a triggering event of remote control traveling exists.

In the embodiment of the present invention, the control interface includes a dashboard. Clicking a central point of the dashboard may be a triggering button of remote control traveling. When the user clicks the triggering button of remote control traveling, it indicates that a triggering event of remote control traveling exists.

In step 112, when it is detected that the triggering event of remote control traveling exists, a traveling remote control function is enabled, and set information of a traveling direction and traveling speed input from the user is received.

In the embodiment of the present invention, the set information of the traveling direction and traveling speed may be information directly input from the user, or it may be information obtained by the user terminal according to the user operation when the user performs different operations to the control interface.

In step 113, the set information of the traveling direction and traveling speed is sent to the self-balanced vehicle to remotely control travelling of the self-balanced vehicle.

For example, the user is apart from self-balanced vehicle for a certain distance, and the user may use the user terminal to remotely control the self-balanced vehicle to travel towards it, and it may also remotely control the traveling speed of the self-balanced vehicle.

Optionally, the method for controlling a self-balanced vehicle as shown in step 111 to step 113 may further include the following steps.

In step 114, it is detected whether a speed limiting operation to the self-balanced vehicle exists.

In the embodiment of the present invention, the speed limiting operation is to set a speed limiting value. The speed limiting value may be a speed limiting value directly input from the user, or a speed limiting value obtained by the user terminal according to the user operation when the user performs operation to the remote control traveling interface; it may also be a value preset by the user terminal or a value designated by a server.

Optionally, detecting whether a speed limiting operation to the self-balanced vehicle exists may use the following way:
detecting whether a setting of highest traveling speed for a speed controlling bar in a remote control traveling interface exists.

In the embodiment of the present invention, the remote control traveling interface may include a speed controlling bar, on which a moving point that the user can drag is provided. A linear distance between the moving point and a starting end of the speed controlling bar may indicate a speed limiting value. The larger the linear distance between the moving point and the starting end of the speed controlling bar is, the higher the speed limiting value of the self-balanced vehicle is. Therefore, the user may drag the moving point to move on the speed controlling bar, to achieve an objective of limiting the traveling speed of the self-balanced vehicle.

In step 115, when it is detected the speed limiting operation to the self-balanced vehicle, the user is limited to set the traveling speed within a speed limiting scope.

In the embodiment of the present invention, the remote control traveling interface includes a dashboard, on which a moving point that the user may drag is provided. A distance between the moving point and a central point of the dashboard may indicate speed amplitude. The larger the distance between the moving point and the central point of the dashboard is, the higher the traveling speed set by the user is. Wherein the largest distance between the moving point and the central point of the dashboard is smaller than or equals to the speed limiting value, so that the user may only drag the moving point in the dashboard, i.e. the user may only set the traveling speed within a speed limiting scope.

It can be seen from the above embodiment that, the user terminal may support function of remotely controlling the self-balanced vehicle, send set information of a traveling direction and traveling speed of the user to the self-balanced vehicle to remotely control travelling of the self-balanced vehicle. Thus, the need of the user to remotely control the self-balanced vehicle is satisfied and the user experience is improved.

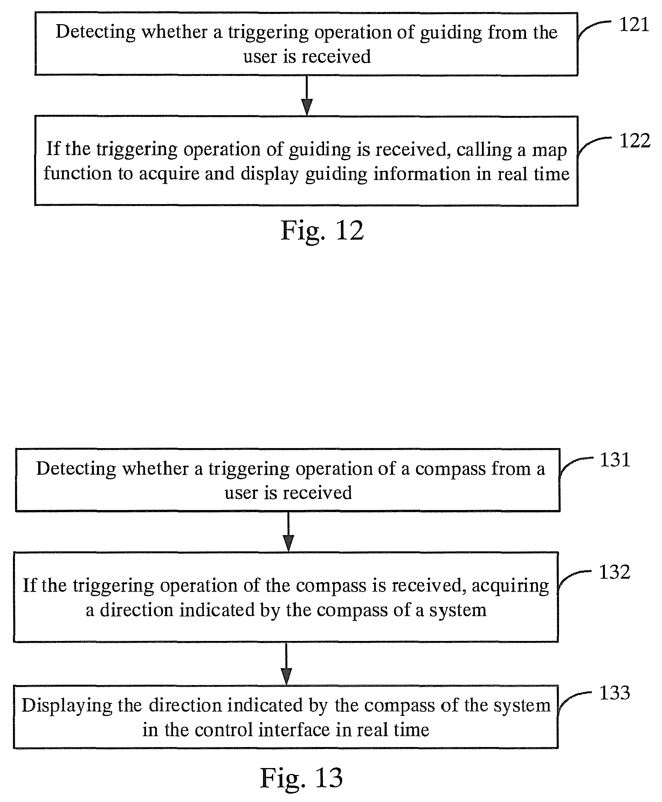

Fig. 12 is a flow chart illustrating a method for controlling a self-balanced vehicle according to another exemplary embodiment of the present invention, which may be applied in a user terminal. Based on the method as shown in Fig. 1, the method may further include the following steps.

In step 121, it is detected whether a triggering operation of guiding from the user is received.

In the embodiment of the present invention, the control interface of the user terminal includes a guiding button, which is set for guiding the user. When the user clicks the guiding button, it indicates that the user has a need of guiding. For example, the user needs to locate the current location, and the clicking operation of the user may be the triggering operation of guiding.

In step 122, if the triggering operation of guiding is received, a map function is called to acquire and display guiding information in real time.

In the embodiment of the present invention, the user terminal may not only control the self-balanced vehicle, but also call the map function, to satisfy the need of guiding of the user.

Optionally, in the step 122, the calling a map function to acquire and display guiding information in real time may adopt the following way:
enabling the map function, and switching to a guiding interface to acquire and display a current location and guiding direction data in real time.

It can be seen from the above embodiment that, the user terminal may support guiding function, and may feedback the guiding information to the user according to the need of guiding in real time, such that the user may acquire the guiding information timely. Thus, it may avoid the user getting lost, improve the safety for the user to use the self-balanced vehicle and improve the user experience.

Fig. 13 is a flow chart illustrating a method for controlling a self-balanced vehicle according to another exemplary embodiment of the present invention, which may be applied in a user terminal. Based on the method as shown in Fig. 1, the method may further include the following steps.

In step 131, it is detected whether a triggering operation of a compass from a user is received.

In the embodiment of the present invention, the triggering operation of the compass aims to acquire directional information, and the triggering operation of the compass may be triggered by the user or triggered by the user terminal separately.

In step 132, if the triggering operation of the compass is received, a direction indicated by the compass of a system is acquired.

In step 133, the direction indicated by the compass of the system is displayed in the control interface in real time.

In the embodiment of the present invention, the control interface includes a dashboard, on which the direction indicated by the compass of a system may be displayed, so that the user may set the traveling direction of the self-balanced vehicle based on the direction.

It can be seen from the above embodiment that, the user terminal may support compass function. A direction indicated by the compass of a system may be displayed in the control interface in real time, such that the user may acquire the guiding information timely. Thus, it may avoid the user getting lost, improve the safety for the user to use the self-balanced vehicle and improve the user experience.

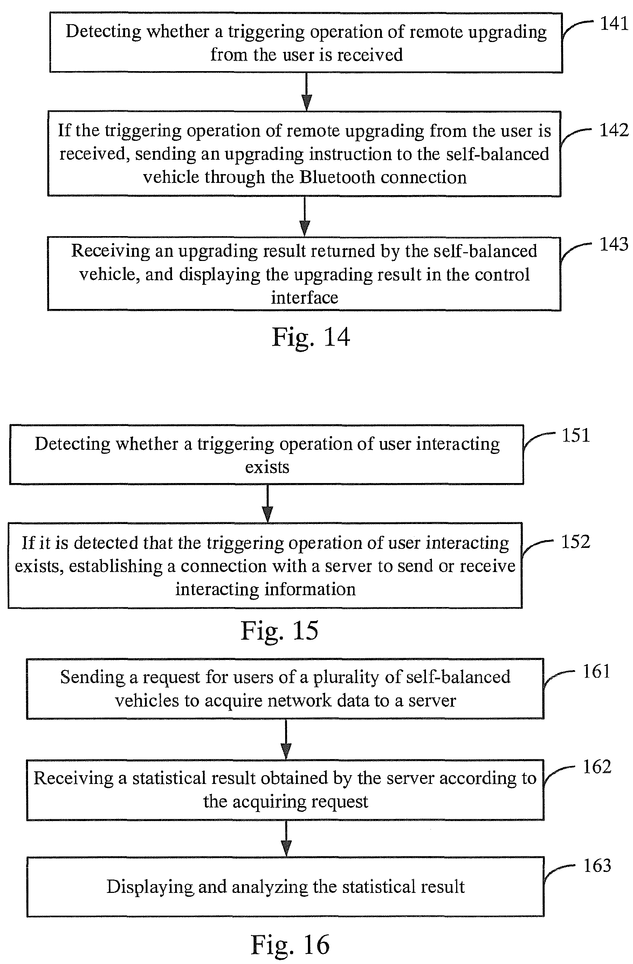

Fig. 14 is a flow chart illustrating a method for controlling a self-balanced vehicle according to another exemplary embodiment of the present invention, which may be applied in a user terminal. Based on the method as shown in Fig. 1, the method may further include the following steps.

In step 141, it is detected whether a triggering operation of remote upgrading from the user is received.

In the embodiment of the present invention, the triggering operation of remote upgrading aims to upgrade the self-balanced vehicle, and the triggering operation of remote upgrading may be triggered by the user or triggered by the user terminal separately, or it may also be triggered when the self-balanced vehicle itself needs upgrade.

In step 142, if the triggering operation of remote upgrading from the user is received, an upgrading instruction is sent to the self-balanced vehicle through the Bluetooth connection.

In the embodiment of the present invention, the user terminal sends the upgrading instruction to the self-balanced vehicle. The self-balanced vehicle may be upgraded according to the upgrading instruction and returns an upgrading result to the user terminal.

In step 143, an upgrading result returned by the self-balanced vehicle is received, and the upgrading result is displayed in the control interface.

It can be seen from the above embodiment that, the user terminal may support remote upgrade function of the self-balanced vehicle, and send an upgrading instruction to the self-balanced vehicle through the Bluetooth connection, such that the self-balanced vehicle upgrades according to the upgrading instruction and returns an upgrading result to the user terminal, thus increasing control scope of the self-balanced vehicle, improving control efficiency of the self-balanced vehicle, and also improving the safety for the user to use the self-balanced vehicle.

Fig. 15 is a flow chart illustrating a method for controlling a self-balanced vehicle according to another exemplary embodiment of the present invention, which may be applied in a user terminal. Based on the method as shown in Fig. 1, the method may further include the following steps.

In step 151, it is detected whether a triggering operation of user interacting exists.

In the embodiment of the present invention, when the user of the self-balanced vehicle is using the self-balanced vehicle, he may need to communicate with a user of other self-balanced vehicle. For example, users of a plurality of self-balanced vehicles may want to communicate with each other about performance of respective self-balanced vehicles. Therefore, the user terminal further provides the user interacting function, so that the users may interact based on a user account or by setting a forum.

In step 152, if it is detected that the triggering operation of user interacting exists, a connection is established with a server to send or receive interacting information.

It can be seen from the above embodiment that, the user terminal may support user interacting function, and establish a connection with a server to send or receive interacting information. Various needs of the user are satisfied and the user experience is improved.

Fig. 16 is a flow chart illustrating a method for controlling a self-balanced vehicle according to another exemplary embodiment of the present invention, which may be applied in a user terminal. Based on the method as shown in Fig. 1, the method may further include the following steps.

In step 161, a request for users of a plurality of self-balanced vehicles to acquire network data is sent to a server.

In the embodiment of the present invention, users of respective self-balanced vehicles may send the data used by their own self-balanced vehicles to the server. The server may perform statistics about these data, which facilitates instructing users of respective self-balanced vehicles to better use the self-balanced vehicles. Therefore, users of respective self-balanced vehicles may also acquire more network data from the server, provide references for themselves to better use the self-balanced vehicles, for example, to reasonably set speed of the self-balanced vehicles.

In step 162, a statistical result obtained by the server according to the acquiring request is received.

In step 163, the statistical result is displayed and analyzed.

It can be seen from the above embodiment that, the user terminal may acquire and display a statistical result of the self-balanced vehicle of the server, to facilitate the user to better control the self-balanced vehicle according to the statistical result. Thus, the user may control the self-balanced vehicle more safely and more efficiently and improve the user experience.

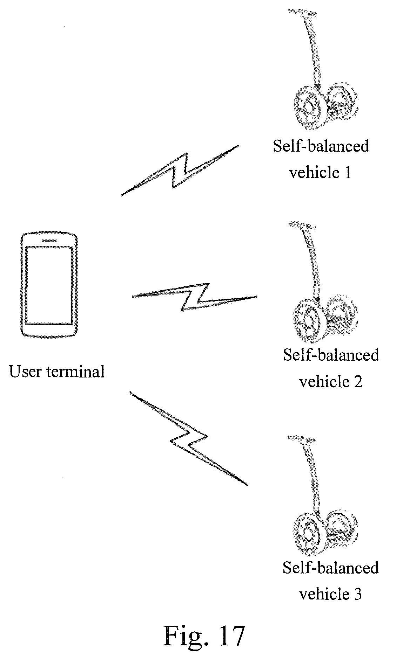

Fig. 17 is a diagram illustrating an application scenario of a method for controlling a self-balanced vehicle according to an exemplary embodiment of the present invention. The application scenario involves a user terminal and a self-balanced vehicle. Wherein there may be one or more self-balanced vehicles, and the user may select one or more self-balanced vehicles from the self-balanced vehicles that have been searched out and control them.

The user terminal searches for the self-balanced vehicle through Bluetooth, for example, searches for a self-balanced vehicle 1, a self-balanced vehicle 2, and a self-balanced vehicle 3.

If the user selects the self-balanced vehicle 1, the user terminal may establish a connection with the self-balanced vehicle 1 through Bluetooth.

The user terminal acquires the current state information of the self-balanced vehicle 1.

The user terminal acquires the traveling state information of the self-balanced vehicle 1 through the Bluetooth connection.

The user terminal controls the self-balanced vehicle 1 according to the traveling state information of the self-balanced vehicle.

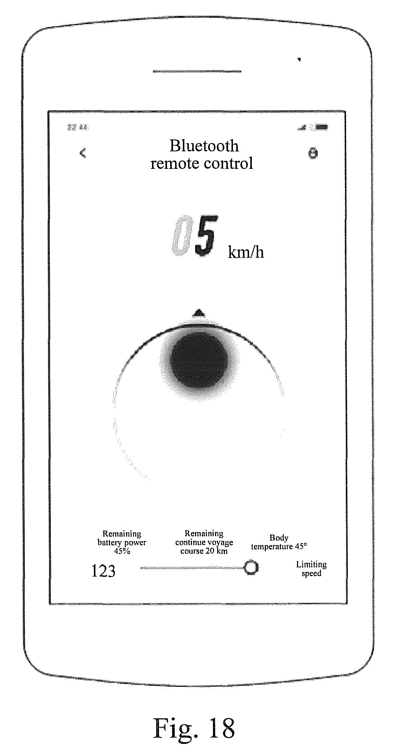

The control interface includes the traveling state information of the self-balanced vehicle. As shown in Fig. 18, the traveling speed of the self-balanced vehicle is 05 km/h, the remaining battery power is 45%, the remaining continuous voyage course is 20 km, and the body temperature is 45°.

The control interface includes a dashboard. As shown in Fig. 18, the user may drag the black light ball to move in the dashboard to achieve an object of adjusting the speed of the self-balanced vehicle. Wherein a distance between the position of the black light ball and the center of the dashboard may represent the speed amplitude. The larger the distance is, the larger the speed amplitude, the higher the speed of the self-balanced vehicle is.

The control interface includes a speed controlling bar. As shown in Fig. 18, the user may drag the moving point on the speed controlling bar to achieve an object of adjusting the highest speed of the self-balanced vehicle. The 10 km/h displayed on the left of the speed controlling bar is the highest traveling speed set by the user.

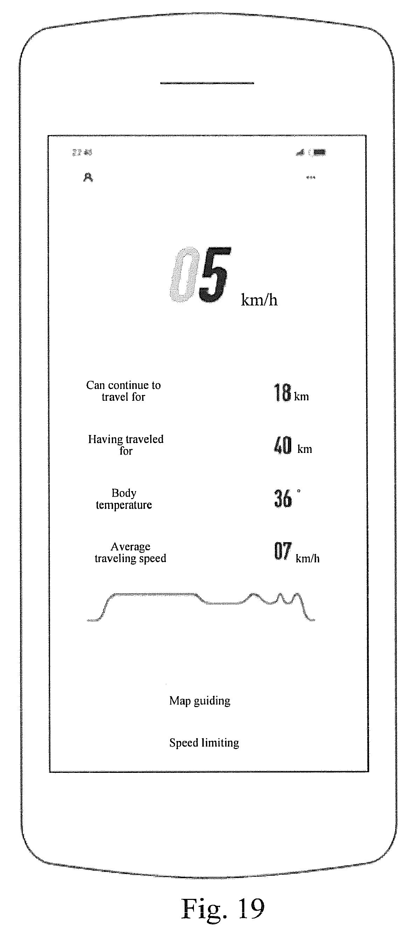

The control interface further includes a map guiding button and a speed limiting button. As shown in Fig. 19, the user may click the map guiding button to conduct the map guiding, and may also click the speed limiting button to limit the speed. In addition, Fig. 19 further displays the statistic data of the self-balanced vehicle, for example: the self-balanced vehicle has traveled for 40 km, the average traveling speed is 7 km/h, or the like.

The control interface further provides a shortcut starting way of the camera. As shown in Fig. 20, the camera function may be enabled by clicking the speed value (05 km/h) in the middle, an ambient image captured by the camera of the cell phone is directly displayed in a background form in a control interface. It avoids the situation where the user forgets to note the ambient environment when he uses the terminal, improving the user experience.

The control interface may display a direction indicated by the compass of the system. For example, "north" in Fig. 20, it indicates that the current traveling direction of the self-balanced vehicle is "north", so that the user may learn about the traveling direction of the self-balanced vehicle timely, avoiding the user getting lost.

Corresponding to the above method embodiments for controlling a self-balanced vehicle, the present invention further provides device embodiments.

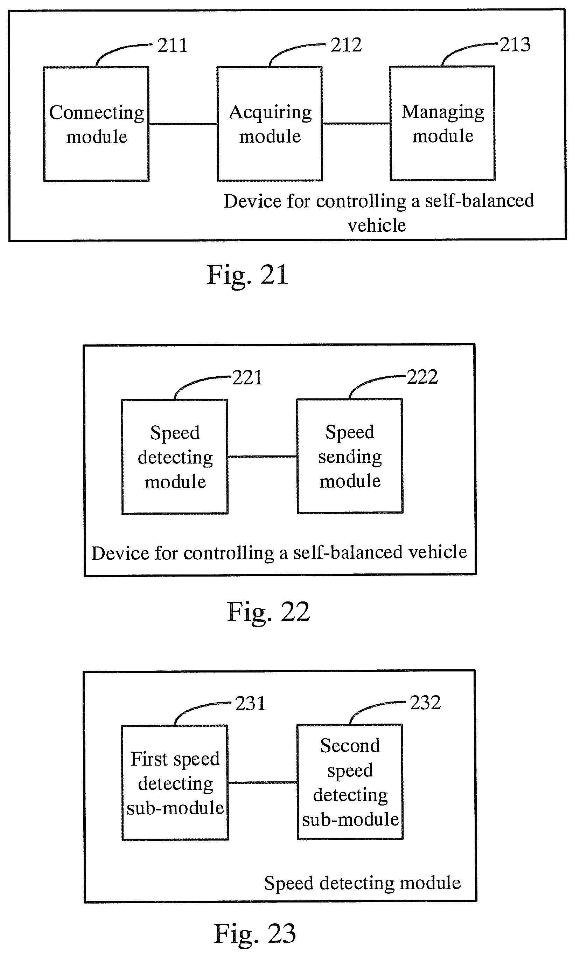

Fig. 21 is a block diagram of a device for controlling a self-balanced vehicle according to an exemplary embodiment of the present invention, which is applied in a user terminal and configured to perform the method for controlling a self-balanced vehicle as shown in Fig. 1. The device includes: a connecting module 211, an acquiring module 212 and a controlling module 213.

Wherein the connecting module 211 is configured to establish a connection with the self-balanced vehicle through Bluetooth;
the acquiring module 212 is configured to acquire traveling state information of the self-balanced vehicle through the connection; and
the controlling module 213 is configured to control the self-balanced vehicle according to the traveling state information of the self-balanced vehicle.

Fig. 22 is a block diagram of a device for controlling a self-balanced vehicle according to another exemplary embodiment of the present invention, which is applied in a user terminal. Based on the device as shown in Fig. 21, the device further includes: a speed detecting module 221 and a speed sending module 222.

The speed detecting module 221 is configured to detect whether a speed adjusting event exists; and
the speed sending module 222 is configured to, when it is detected that the speed adjusting event exists, send a received speed adjusting value to the self-balance vehicle through the connection.

Fig. 23 is a block diagram of a device for controlling a self-balanced vehicle according to another exemplary embodiment of the present invention, which is applied in a user terminal. Based on the device as shown in Fig. 22, the speed detecting module 221 includes: a first speed detecting sub-module 231 or a second speed detecting sub-module 232.

Wherein the first speed detecting sub-module 231 is configured to detect whether an operation event for adjusting speed amplitude of a dashboard in a control interface exists; and
the second speed detecting sub-module 232 is configured to detect whether an operation event for adjusting a speed controlling bar in the control interface exists.

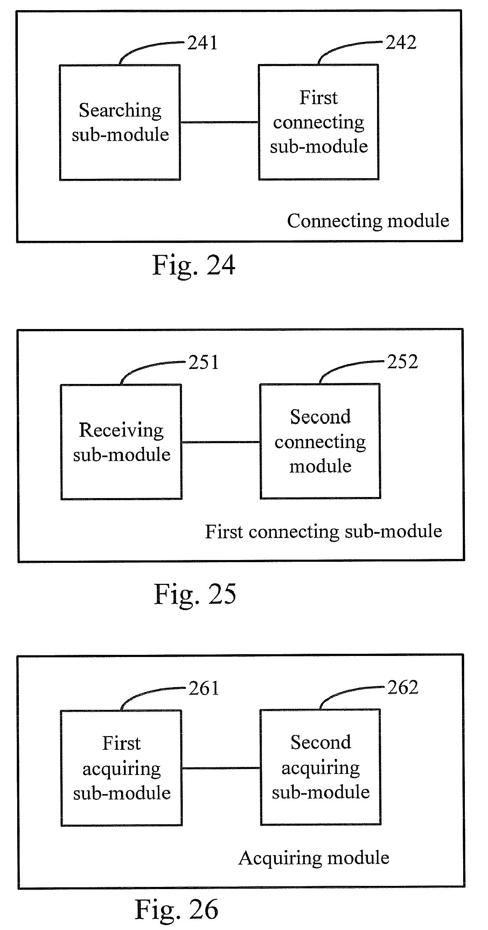

Fig. 24 is a block diagram of a device for controlling a self-balanced vehicle according to another exemplary embodiment of the present invention, which is applied in a user terminal. Based on the device as shown in Fig. 21, the connecting module 211 includes: a searching sub-module 241 and a first connecting sub-module 242.

Wherein searching sub-module 241 is configured to search for the self-balanced vehicle through Bluetooth; and
the first connecting sub-module 242 is configured to pair the Bluetooth connection with the searched self-balanced vehicle, to establish a connection.

Fig. 25 is a block diagram of a device for controlling a self-balanced vehicle according to another exemplary embodiment of the present invention, which is applied in a user terminal. Based on the device as shown in Fig. 24, the first connecting sub-module further 242 includes: a receiving sub-module 251 and a second connecting module 252.

Wherein the receiving sub-module 251 is configured to, when a number of the searched self-balanced vehicle is more than one, receive a selecting instruction with respect to the self-balanced vehicle; and
the second connecting module 252 is configured to connect the self-balanced vehicle selected by the user according to the selecting instruction.

Fig. 26 is a block diagram of a device for controlling a self-balanced vehicle according to another exemplary embodiment of the present invention, which is applied in a user terminal. Based on the device as shown in Fig. 21, the acquiring module 212 includes: a first acquiring sub-module 261 or a second acquiring sub-module 262.

Wherein the first acquiring sub-module 261 is configured to receive the traveling state information of the self-balanced vehicle periodically sent by the self-balanced vehicle through the connection; and
the second acquiring sub-module 262 is configured to send a state acquiring instruction to the self-balanced vehicle periodically, and receive the traveling state information of the self-balanced vehicle returned by the self-balanced vehicle according to the state acquiring instruction.

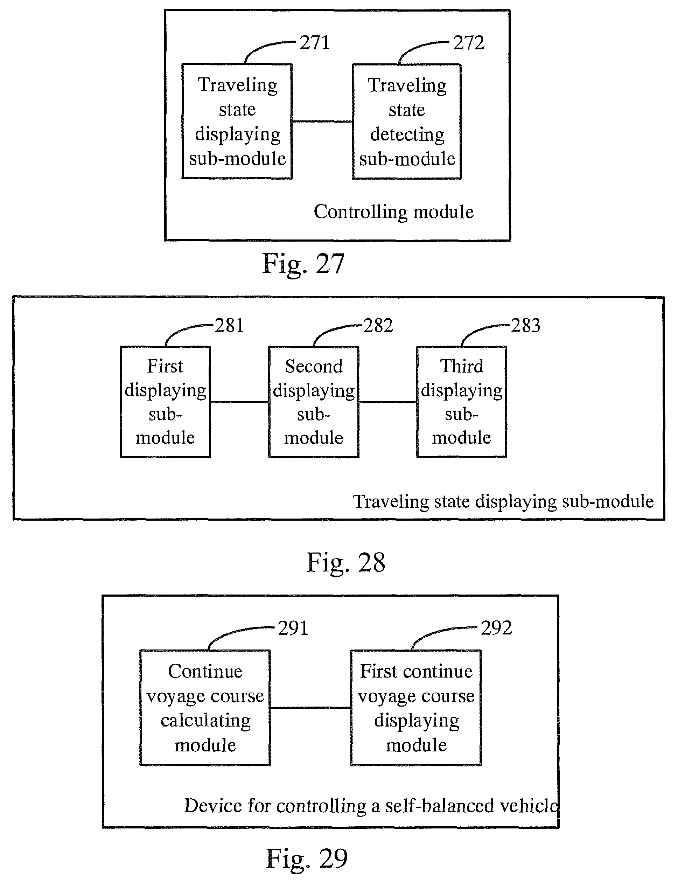

Fig. 27 is a block diagram of a device for controlling a self-balanced vehicle according to another exemplary embodiment of the present invention, which is applied in a user terminal. Based on the device as shown in Fig. 21, the controlling module 213 includes: a traveling state displaying sub-module 271 and/or a traveling state detecting sub-module 272.

Wherein the traveling state displaying sub-module 271 is configured to display the traveling state information in a control interface; and
the traveling state detecting sub-module 272 is configured to detect the traveling state information, and alarm when the traveling state information reaches a corresponding traveling state threshold.

Fig. 28 is a block diagram of a device for controlling a self-balanced vehicle according to another exemplary embodiment of the present invention, which is applied in a user terminal. Based on the device as shown in Fig. 27, the traveling state displaying sub-module 271 includes: a first displaying sub-module 281; and/or a second displaying sub-module 282; and/or a third displaying sub-module 283.

Wherein the first displaying sub-module 281 is configured to display a traveling speed of the self-balanced vehicle in the control interface;
the second displaying sub-module 282 is configured to display a remaining battery power of the self-balanced vehicle in the control interface; and
the third displaying sub-module 283 is configured to display a body temperature of the self-balanced vehicle in the control interface.

Fig. 29 is a block diagram of a device for controlling a self-balanced vehicle according to another exemplary embodiment of the present invention, which is applied in a user terminal. Based on the device as shown in Fig. 27, the device further includes: a continue voyage course calculating module 291 and a first continue voyage course displaying module 292.

Wherein the continue voyage course calculating module 291 is configured to, when the traveling state information contains a remaining battery power, calculate a remaining continue voyage course according to the remaining battery power; and
the first continue voyage course displaying module 292 is configured to display the remaining continue voyage course in the control interface.

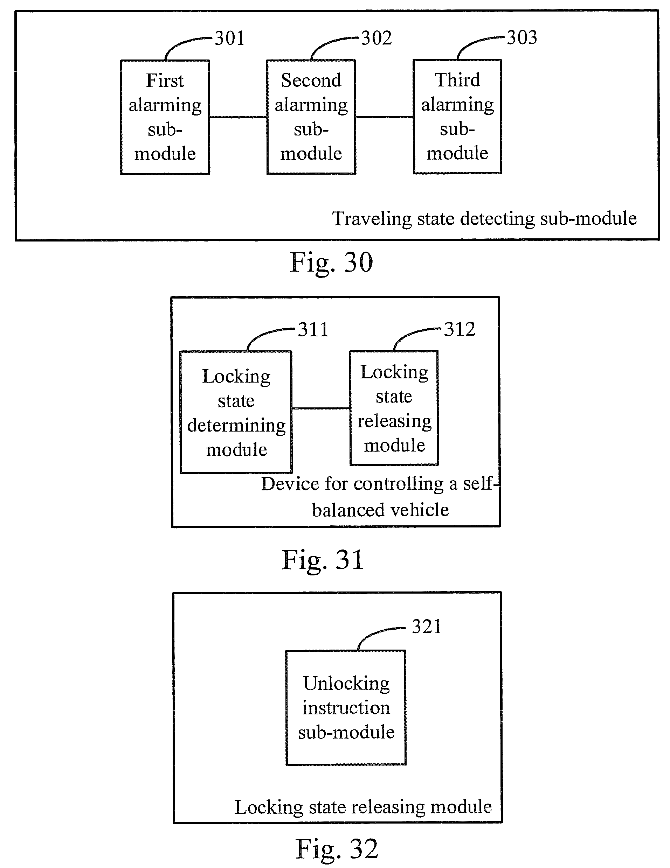

Fig. 30 is a block diagram of a device for controlling a self-balanced vehicle according to another exemplary embodiment of the present invention, which is applied in a user terminal. Based on the device as shown in Fig. 27, the traveling state detecting sub-module 272 includes: a first alarming sub-module 301; and/or a second alarming sub-module 302; and/or a third alarming sub-module 303.

Wherein the first alarming sub-module 301 is configured to alarm when a remaining battery power of the self-balanced vehicle is below a battery power threshold;
the second alarming sub-module 302 is configured to alarm when a traveling speed of the self-balanced vehicle is higher than a speed threshold; and
the third alarming sub-module 303 is configured to alarm when a body temperature of the self-balanced vehicle is higher than a temperature threshold.

Fig. 31 is a block diagram of a device for controlling a self-balanced vehicle according to another exemplary embodiment of the present invention, which is applied in a user terminal. Based on the device as shown in Fig. 21, the device further includes: a locked state determining module 311 and a locked state releasing module 312.

Wherein the locked state determining module 311 is configured to determine whether the self-balanced vehicle is in a locked state; and
the locked state releasing module 312 is configured to, when it is determined that the self-balanced vehicle is in the locked state, release the locked state of the self-balanced vehicle.

Fig. 32 is a block diagram of a device for controlling a self-balanced vehicle according to another exemplary embodiment of the present invention, which is applied in a user terminal. Based on the device as shown in Fig. 31, the locked state releasing module 312 includes: an unlocking instruction sub-module 321.

Wherein the unlocking instruction sub-module 321 is configured to, when a triggering operation of releasing locking is detected, send an unlocking instruction to the self-balanced vehicle through the connection, such that the self-balanced vehicle releases the locked state according to the received unlocking instruction.

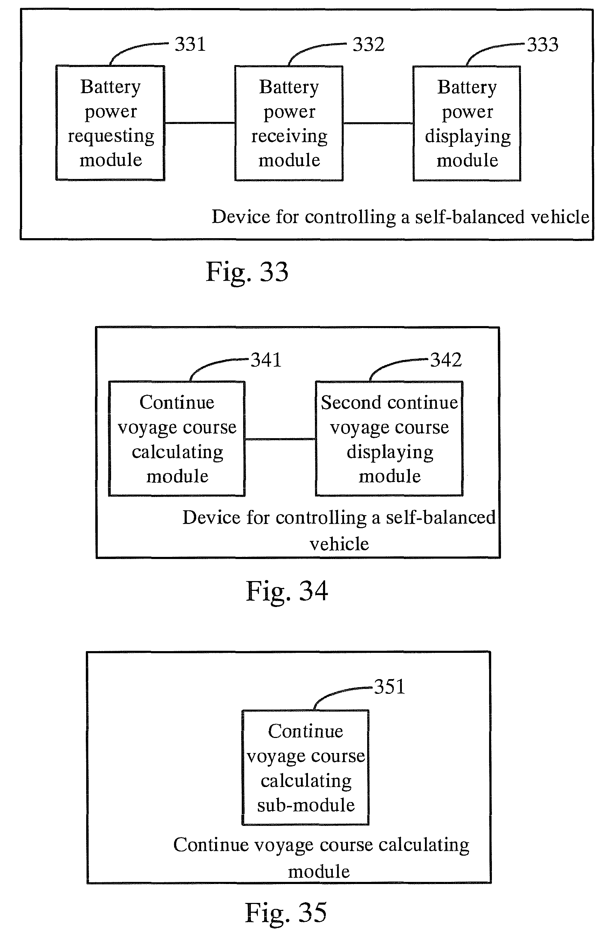

Fig. 33 is a block diagram of a device for controlling a self-balanced vehicle according to another exemplary embodiment of the present invention, which is applied in a user terminal. Based on the device as shown in Fig. 31, the device further includes: a battery power requesting module 331, a battery power receiving module 332 and a battery power displaying module.

Wherein the battery power requesting module 331 is configured to, when it is determined that the self-balanced vehicle is in the locked state, send a request for acquiring a remaining battery power to the self-balanced vehicle;
the battery power receiving module 332 is configured to receive the remaining battery power returned by the self-balanced vehicle; and
the battery power displaying module 333 is configured to display the remaining battery power in a lock screen interface.

Fig. 34 is a block diagram of a device for controlling a self-balanced vehicle according to another exemplary embodiment of the present invention, which is applied in a user terminal. Based on the device as shown in Fig. 33, the device further includes: a continue voyage course calculating module 341 and a second continue voyage course displaying module 342.

Wherein the continue voyage course calculating module 341 is configured to calculate a remaining continue voyage course according to the remaining battery power; and
the second continue voyage course displaying module 342 is configured to display the remaining continue voyage course on the lock screen interface.

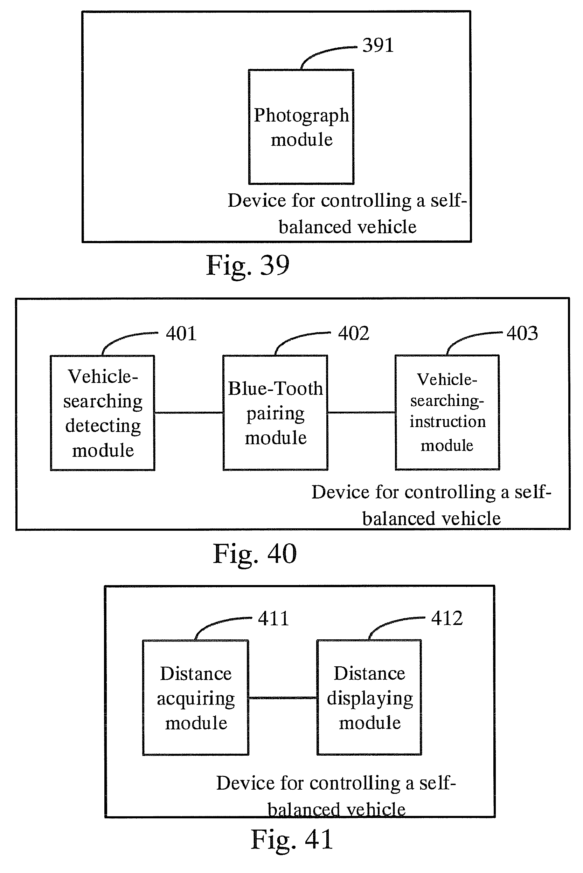

Fig. 35 is a block diagram of a device for controlling a self-balanced vehicle according to another exemplary embodiment of the present invention, which is applied in a user terminal. Based on the device as shown in Fig. 39 or Fig. 34, the continue voyage course calculating module 291 or the continue voyage course calculating module 341 both include: a continue voyage course calculating sub-module 351.

Wherein the continue voyage course calculating sub-module 351 is configured to obtain the remaining continue voyage course based on a product of the remaining battery power and a configurable correlation coefficient.

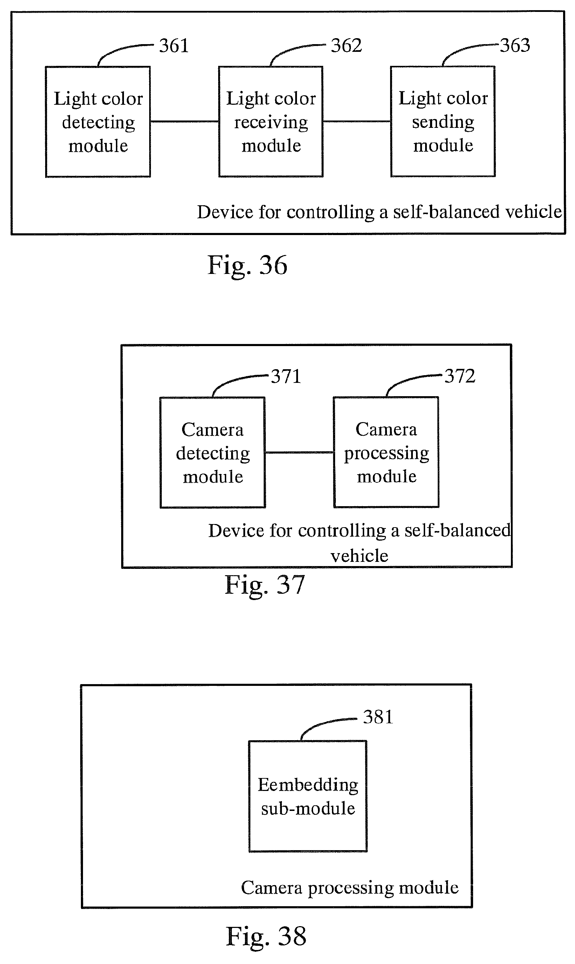

Fig. 36 is a block diagram of a device for controlling a self-balanced vehicle according to another exemplary embodiment of the present invention, which is applied in a user terminal. Based on the device as shown in Fig. 21, the device further includes: a light color detecting module 361, a light color receiving module 362 and a light color sending module 363.

Wherein the light color detecting module 361 is configured to detect whether a light color setting event for the self-balanced vehicle exists;
the light color receiving module 362 is configured to, when the light color setting event is detected, receive a light color value selected from a user; and
the light color sending module 363 is configured to send a color adjustment instruction containing the selected light color value to the self-balanced vehicle through the connection.

Fig. 37 is a block diagram of a device for controlling a self-balanced vehicle according to another exemplary embodiment of the present invention, which is applied in a user terminal. Based on the device as shown in Fig. 21, the device further includes: a camera detecting module 371 and a camera processing module 372.

Wherein the camera detecting module 371 is configured to detect whether a triggering event of a camera mode exists; and

the camera processing module 372 is configured to, when the triggering event of the camera mode is detected, enable a camera mode, and display an image captured by a camera in a background form in a control interface.

Fig. 38 is a block diagram of a device for controlling a self-balanced vehicle according to another exemplary embodiment of the present invention, which is applied in a user terminal. Based on the device as shown in Fig. 37, the camera processing module 372 includes: an embedding sub-module 381.

Wherein the embedding sub-module 381 is configured to embed the image captured by the camera below a user interacting layer of the control interface in real time.

Fig. 39 is a block diagram of a device for controlling a self-balanced vehicle according to another exemplary embodiment of the present invention, which is applied in a user terminal. Based on the device as shown in Fig. 37, the device further includes: a photograph module 391.

Wherein the photograph module 391 is configured to, under the camera mode, when a triggering operation of photographing is detected, enable a camera function to photograph.

Fig. 40 is a block diagram of a device for controlling a self-balanced vehicle according to another exemplary embodiment of the present invention, which is applied in a user terminal. Based on the device as shown in Fig. 21, the device further includes: a vehicle-searching detecting module 401, a Blue-Tooth pairing module 402 and a vehicle-searching-instruction module 403.

Wherein the vehicle-searching detecting module 401 is configured to detect whether a vehicle searching operation of a user is received;
the Blue-Tooth pairing module 402 is configured to, when the vehicle searching operation of the user is received, search for the self-balanced vehicle through Bluetooth, and pair the Bluetooth connection with the self-balanced vehicle; and
the vehicle-searching-instruction module 403 is configured to, when the Bluetooth connection with the self-balanced vehicle passes the pairing, send a vehicle searching instruction to the self-balanced vehicle such that the self-balanced vehicle performs a vehicle searching warning.

Fig. 41 is a block diagram of a device for controlling a self-balanced vehicle according to another exemplary embodiment of the present invention, which is applied in a user terminal. Based on the device as shown in Fig. 40, the device further includes: a distance acquiring module 411 and a distance displaying module 412.

Wherein the distance acquiring module 411 is configured to obtain a distance from the self-balanced vehicle through the Bluetooth connection with the self-balanced vehicle; and
the distance displaying module 412 is configured to display the distance from the self-balanced vehicle in the control interface.

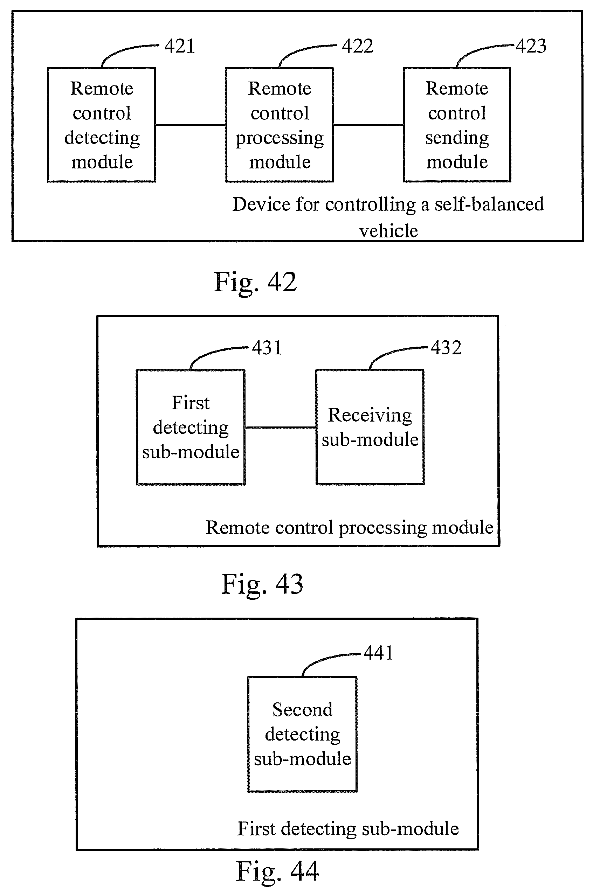

Fig. 42 is a block diagram of a device for controlling a self-balanced vehicle according to another exemplary embodiment of the present invention, which is applied in a user terminal. Based on the device as shown in Fig. 40, the device further includes: a remote control detecting module 421, a remote control processing module 422 and a remote control sending module 423.

Wherein the remote control detecting module 421 is configured to detect whether a triggering event of remote control traveling exists;
the remote control processing module 422 is configured to, when it is detected that the triggering event of remote control traveling exists, enable a traveling remote control function, and receive set information of a traveling direction and traveling speed input from the user; and
the remote control sending module 423 is configured to send the set information of the traveling direction and traveling speed to the self-balanced vehicle to remotely control travelling of the self-balanced vehicle.

Fig. 43 is a block diagram of a device for controlling a self-balanced vehicle according to another exemplary embodiment of the present invention, which is applied in a user terminal. Based on the device as shown in Fig. 42, the remote control processing module 422 includes: a first detecting sub-module 431 and a receiving sub-module 432.

Wherein the first detecting sub-module 431 is configured to, enable a traveling remote control function, and detect whether an setting event for the travelling direction and traveling speed of the self-balanced vehicle exists; and
the receiving sub-module 432 is configured to, when it is detected that the setting event for the travelling direction and traveling speed of the self-balanced vehicle exists, receive set information of the traveling direction and traveling speed input from the user.

Fig. 44 is a block diagram of a device for controlling a self-balanced vehicle according to another exemplary embodiment of the present invention, which is applied in a user terminal. Based on the device as shown in Fig. 42, the first detecting sub-module 431 includes: a second detecting sub-module 441.

Wherein the second detecting sub-module 441 is configured to detect whether an operation event to adjust a directional angle of a dashboard in the control interface and adjust a distance from a center of the dashboard in the control interface exists.

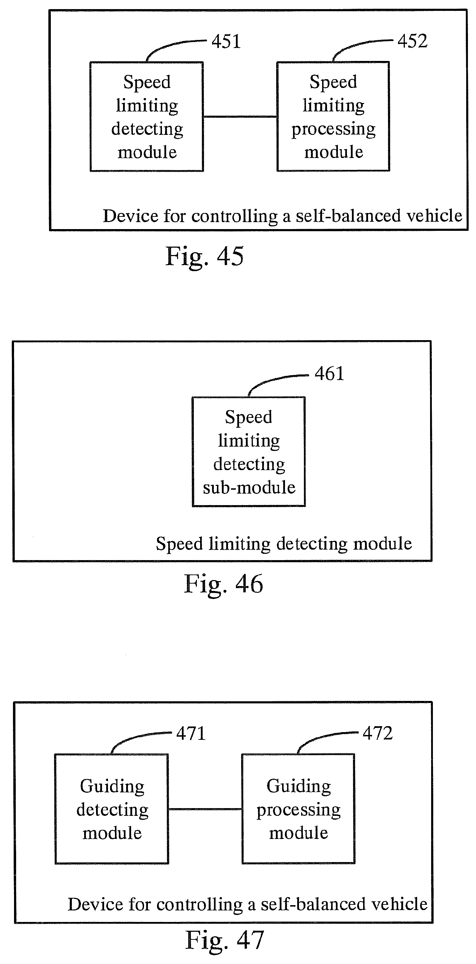

Fig. 45 is a block diagram of a device for controlling a self-balanced vehicle according to another exemplary embodiment of the present invention, which is applied in a user terminal. Based on the device as shown in Fig. 42, the device further includes: a speed limiting detecting module 451 and a speed limiting processing module 452.

Wherein the speed limiting detecting module 451 is configured to detect whether a speed limiting operation to the self-balanced vehicle exists; and

the speed limiting processing module 452 is configured to, when it is detected the speed limiting operation to the self-balanced vehicle, limit the user to set the traveling speed within a speed limiting scope.

Fig. 46 is a block diagram of a device for controlling a self-balanced vehicle according to another exemplary embodiment of the present invention, which is applied in a user terminal. Based on the device as shown in Fig. 45, the speed limiting detecting module 451 includes: a speed limiting detecting sub-module 461.

Wherein the speed limiting detecting sub-module 461 is configured to detect whether a setting of highest traveling speed for a speed controlling bar in a remote control traveling interface exists.

Fig. 47 is a block diagram of a device for controlling a self-balanced vehicle according to another exemplary embodiment of the present invention, which is applied in a user terminal. Based on the device as shown in Fig. 21, the device further includes: a guiding detecting module 471 and a guiding processing module 472.

Wherein the guiding detecting module 471 is configured to detect whether a triggering operation of guiding from the user is received; and
the guiding processing module 472 is configured to, if the triggering operation of guiding is received, call a map function to acquire and display guiding information in real time.

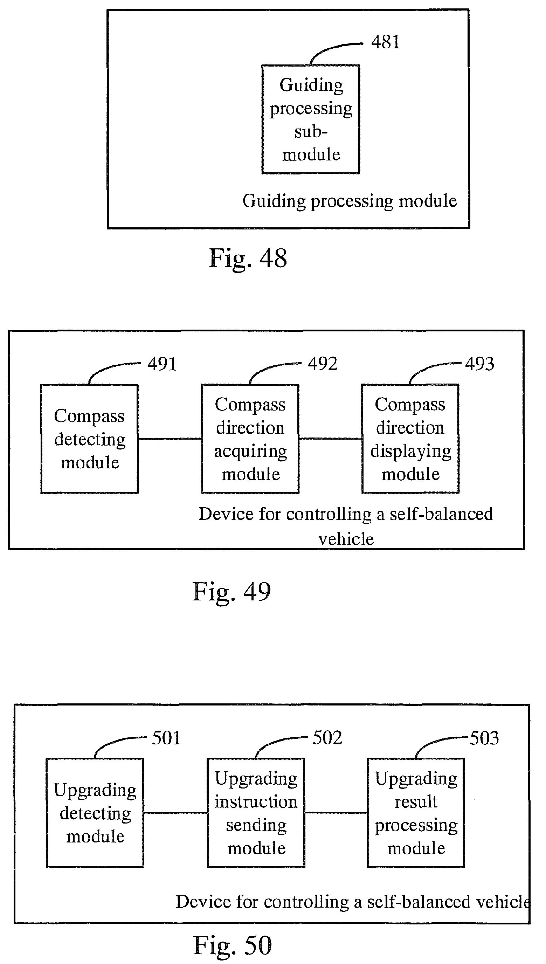

Fig. 48 is a block diagram of a device for controlling a self-balanced vehicle according to another exemplary embodiment of the present invention, which is applied in a user terminal. Based on the device as shown in Fig. 47, the guiding processing module 472 includes: a guiding processing sub-module 481.

Wherein the guiding processing sub-module 481 is configured to enable the map function, and switch to a guiding interface to acquire and display a current location and guiding direction data in real time.

Fig. 49 is a block diagram of a device for controlling a self-balanced vehicle according to another exemplary embodiment of the present invention, which is applied in a user terminal. Based on the device as shown in Fig. 21, the device further includes: a compass detecting module 491, a compass direction acquiring module 492 and a compass direction displaying module 493.

Wherein the compass detecting module 491 is configured to detect whether a triggering operation of a compass from a user is received;
the compass direction acquiring module 492 is configured to, if the triggering operation of the compass is received, acquire a direction indicated by the compass of a system; and
the compass direction displaying module 493 is configured to display the direction indicated by the compass of the system in the control interface in real time.

Fig. 50 is a block diagram of a device for controlling a self-balanced vehicle according to another exemplary embodiment of the present invention, which is applied in a user terminal. Based on the device as shown in Fig. 21, the device further includes: an upgrading detecting module 501, an upgrading instruction sending module 502 and an upgrading result processing module 503.

Wherein the upgrading detecting module 501 is configured to detect whether a triggering operation of remote upgrading from the user is received;
the upgrading instruction sending module 502 is configured to, if the triggering operation of remote upgrading from the user is received, send an upgrading instruction to the self-balanced vehicle through the connection; and
the upgrading result processing module 503 is configured to, receive an upgrading result returned by the self-balanced vehicle, and display the upgrading result in the control interface.

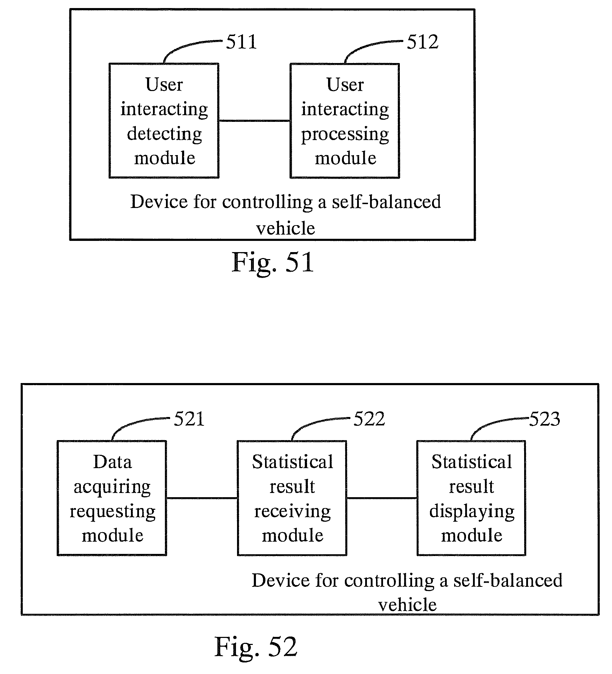

Fig. 51 is a block diagram of a device for controlling a self-balanced vehicle according to another exemplary embodiment of the present invention, which is applied in a user terminal. Based on the device as shown in Fig. 21, the device further includes: a user interacting detecting module 511 and a user interacting processing module 512.

Wherein the user interacting detecting module 511 is configured to detect whether a triggering operation of user interacting exists; and
the user interacting processing module 512 is configured to, if it is detected that the triggering operation of user interacting exists, establish a connection with a server to send or receive interacting information.

Fig. 52 is a block diagram of a device for controlling a self-balanced vehicle according to another exemplary embodiment of the present invention, which is applied in a user terminal. Based on the device as shown in Fig. 21, the device further includes: a data acquiring requesting module 521, a statistical result receiving module 522 and a statistical result displaying module 523.

Wherein the data acquiring requesting module 521 is configured to send to a server a request for users of a plurality of self-balanced vehicles to acquire network data;
the statistical result receiving module 522 is configured to receive a statistical result obtained by the server according to the acquiring request; and
the statistical result displaying module 523 is configured to display and analyze the statistical result.

Corresponding to Fig. 21, the present invention further provides another device for controlling a self-balanced vehicle, including:
a processor; and
a memory for storing instructions executable by the processor,
wherein the processor is configured to perform:
   establishing a connection with the self-balanced vehicle through Bluetooth;
   acquiring traveling state information of the self-balanced vehicle through the connection; and
   controlling the self-balanced vehicle according to the traveling state information of the self-balanced vehicle.

Implementation of the functions and operations of the modules in the above devices may be specifically referred to the implementation of the corresponding steps in the above methods, which may not be repeated herein.

For the device embodiments, since they correspond to the method embodiments, they may be referred to the related part of the description of the method embodiments. The device embodiments described above are merely illustrative. The units described as separate may be or may not be physically separate, and the components illustrated as a units may be or may not be physical units, and may be at the same location, or may be distributed to multiple units over the network. A part of or all of the modules may be selected to achieve the objective of the present invention as desired. One skilled in the art can understand and practice the embodiments without paying creative labor.

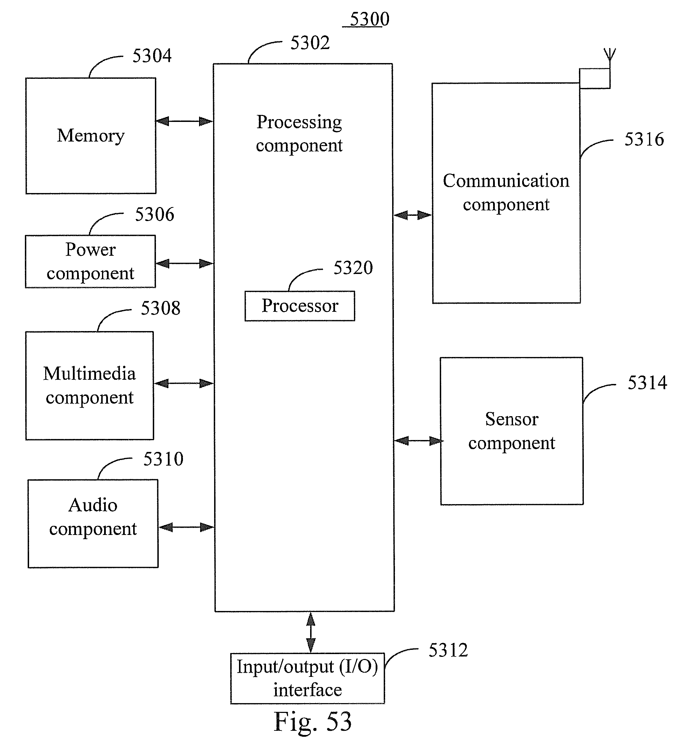

Fig. 53 is a block diagram of a device 5300 (at a terminal side) for controlling a self-balanced vehicle according to an exemplary embodiment. For example, the device 5300 may be a mobile phone with routing function, a computer, a digital broadcast terminal, a messaging device, a gaming console, a tablet, a medical device, exercise equipment, a personal digital assistant, and the like.

Referring to Fig. 53, the device 5300 may include one or more of the following components: a processing component 5302, a memory 5304, a power component 5306, a multimedia component 5308, an audio component 5310, an input/output (I/O) interface 5312, a sensor component 5314, and a communication component 5316.

The processing component 5302 typically controls overall operations of the device 5300, such as the operations associated with display, telephone calls, data communications, camera operations, and recording operations. The processing component 5302 may include one or more processors 5320 to execute instructions to perform all or part of the steps in the above described methods. Moreover, the processing component 5302 may include one or more modules which facilitate the interaction between the processing component 5302 and other components. For instance, the processing component 5302 may include a multimedia module to facilitate the interaction between the multimedia component 5308 and the processing component 5302.

The memory 5304 is configured to store various types of data to support the operation of the device 5300. Examples of such data include instructions for any applications or methods operated on the device 5300, contact data, phonebook data, messages, pictures, video, etc. The memory 5304 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 5306 provides power to various components of the device 5300. The power component 5306 may include a power control system, one or more power sources, and any other components associated with the generation, control, and distribution of power in the device 5300.

The multimedia component 5308 includes a screen providing an output interface between the device 5300 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 5308 includes a front camera and/or a rear camera. The front camera and the rear camera may receive an external multimedia datum while the device 5300 is in an operation mode, such as a photographing mode or a video mode. Each of the front camera and the rear camera may be a fixed optical lens system or have focus and optical zoom capability.

The audio component 5310 is configured to output and/or input audio signals. For example, the audio component 5310 includes a microphone ("MIC") configured to receive an external audio signal when the device 5300 is in an operation mode, such as a call mode, a recording mode, and a voice recognition mode. The received audio signal may be further stored in the memory 5304 or transmitted via the communication component 5316. In some embodiments, the audio component 5310 further includes a speaker to output audio signals.

The I/O interface 5312 provides an interface between the processing component 5302 and peripheral interface modules, such as a keyboard, a click wheel, buttons, and the like. The buttons may include, but are not limited to, a home button, a volume button, a starting button, and a locking button.

The sensor component 5314 includes one or more sensors to provide status assessments of various aspects of the device 5300. For instance, the sensor component 5314 may detect an open/closed status of the device 5300, relative positioning of components, e.g., the display and the keypad, of the device 5300, a change in position of the device 5300 or a component of the device 5300, a presence or absence of user contact with the device 5300, an orientation or an acceleration/deceleration of the device 5300, and a change in temperature of the device 5300. The sensor component 5314 may include a proximity sensor configured to detect the presence of nearby objects without any physical contact. The sensor component 5314 may further include a light sensor, such as a CMOS or CCD image sensor, for use in imaging applications. In some embodiments, the sensor component 5314 may further include an accelerometer sensor, a gyroscope sensor, a magnetic sensor, a pressure sensor, a microwave sensor or a temperature sensor.

The communication component 5316 is configured to facilitate communication, wired or wirelessly, between the device 5300 and other devices. The device 5300 may access a wireless network based on a communication standard, such as WiFi, 2G, or 3G, or a combination thereof. In one exemplary embodiment, the communication component 5316 receives a broadcast signal or broadcast associated information from an external broadcast control system via a broadcast channel. In one exemplary embodiment, the communication component 5316 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 5300 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is further provided a non-transitory computer-readable storage medium including instructions, such as included in the memory 5304, executable by the processor 5320 in the device 5300, for performing the above-described methods. For example, the non-transitory computer-readable storage medium may be a ROM, a RAM, a CD-ROM, a magnetic tape, a floppy disc, an optical data storage device, and the like.

A non-transitory computer readable storage medium, when instructions in the storage medium are executed by a processor of a mobile terminal, the mobile terminal is caused to perform the method for controlling a self-balanced vehicle. The method includes:
establishing a connection with the self-balanced vehicle through Bluetooth;
acquiring traveling state information of the self-balanced vehicle through the connection; and
controlling the self-balanced vehicle according to the traveling state information of the self-balanced vehicle.

## Claims

1. A method for a mobile terminal to perform controlling a self-balanced vehicle, comprising:
establishing (110) a connection with the self-balanced vehicle through Bluetooth;
acquiring (120) traveling state information of the self-balanced vehicle through the connection; and
controlling (130) the self-balanced vehicle according to the traveling state information of the self-balanced vehicle.

2. The method of claim 1, further comprising:
detecting (210) whether a speed adjusting event exists; and
when it is detected that the speed adjusting event exists, sending (220) a received speed adjusting value to the self-balance vehicle through the connection.

3. controllingThe method of claim 1, further comprising:
determining (610) whether the self-balanced vehicle is in a locked state; and
when it is determined that the self-balanced vehicle is in the locked state, releasing (620) the locked state of the self-balanced vehicle.

4. The method of claim 1, further comprising:
detecting (810) whether a triggering event of a camera mode exists; and
when the triggering event of the camera mode is detected, enabling (820) the camera mode, and displaying an image captured by a camera in a background form in a control interface.

5. The method of claim 4, wherein displaying an image captured by a camera in a background form in a control interface comprises:
embedding the image captured by the camera below a user interacting layer of the control interface in real time.

6. The method of claim 1, further comprising:
detecting (91) whether a vehicle searching operation is received;
when the vehicle searching operation is received, searching (92) for the self-balanced vehicle through Bluetooth, and pairing the Bluetooth connection with the self-balanced vehicle; and
when the Bluetooth connection with the self-balanced vehicle passes the pairing, sending (93) a vehicle searching instruction to the self-balanced vehicle such that the self-balanced vehicle performs a vehicle searching warning.

7. The method of claim 6, wherein searching for the self-balanced vehicle through Bluetooth, and pairing the Bluetooth connection with the self-balanced vehicle further comprises:
obtaining (94) a distance from the self-balanced vehicle through the Bluetooth connection with the self-balanced vehicle; and
displaying (95) the distance from the self-balanced vehicle in the control interface.

8. The method of claim 6, further comprising:
detecting (101) whether a triggering event of remote control traveling exists;
when it is detected that the triggering event of remote control traveling exists, enabling (102) a traveling remote control function, and receiving set information of a traveling direction and traveling speed input; and
sending (103) the set information of the traveling direction and traveling speed to the self-balanced vehicle to remotely control travelling of the self-balanced vehicle.

9. The method of claim 8, further comprising:
detecting (114) whether a speed limiting operation to the self-balanced vehicle exists; and
when it is detected the speed limiting operation to the self-balanced vehicle, limiting (115) the traveling speed within a speed limiting scope.

10. The method of claim 1, further comprising:
detecting (131) whether a triggering operation of a compass is received;
if the triggering operation of the compass is received, acquiring (132) a direction indicated by the compass of a system; and
displaying (133) the direction indicated by the compass of the system in the control interface in real time.

11. The method of claim 1, further comprising:
sending (161) to a server a request for users of a plurality of self-balanced vehicles to acquire network data;
receiving (162) a statistical result obtained by the server according to the acquiring request; and
displaying (163) and analyzing the statistical result.

12. A device for controlling a self-balanced vehicle, comprising:
a connecting module (211) configured to establish a connection with the self-balanced vehicle through Bluetooth;
an acquiring module (212) configured to acquire traveling state information of the self-balanced vehicle through the connection; and
a controlling module (213) configured to control the self-balanced vehicle according to the traveling state information of the self-balanced vehicle.

13. The device of claim 12, further comprising:
a speed detecting module (221) configured to detect whether a speed adjusting event exists; and
a speed sending module (222) configured to, when it is detected that the speed adjusting event exists, send a received speed adjusting value to the self-balance vehicle through the connection.

14. controllingThe device of claim 12, further comprising:
a locked state determining module (311) configured to determine whether the self-balanced vehicle is in a locked state; and
a locked state releasing module (312) configured to, when it is determined that the self-balanced vehicle is in the locked state, release the locked state of the self-balanced vehicle.

15. The device of claim 12, further comprising:
a camera detecting module (371) configured to detect whether a triggering event of a camera mode exists; and
a camera processing module (372) configured to, when the triggering event of the camera mode is detected, enable a camera mode, and display an image captured by a camera in a background form in a control interface.
